# EUROPEAN PATENT SPECIFICATION

(11) **EP 4 394 619 B1**
(45) Date of publication and mention of the grant of the patent: **18.03.2026**
(21) Application number: 22928300.7
(22) Date of filing: 17.11.2022
(51) Int. Cl.: G06F 16/23, G06F 21/64

(54) **DATA PROCESSING METHOD AND APPARATUS BASED ON BLOCKCHAIN, AND DEVICE AND READABLE STORAGE MEDIUM**
DATENVERARBEITUNGSVERFAHREN UND -VORRICHTUNG AUF BASIS EINER BLOCKCHAIN SOWIE VORRICHTUNG UND LESBARES SPEICHERMEDIUM
PROCÉDÉ ET APPAREIL DE TRAITEMENT DE DONNÉES BASÉS SUR UNE CHAÎNE DE BLOCS, ET DISPOSITIF ET SUPPORT DE STOCKAGE LISIBLE

(30) Priority: 24.02.2022 CN 202210174690
(43) Date of publication of application: 03.07.2024
(73) Proprietor: Tencent Technology (Shenzhen) Company Limited, Shenzhen, Guangdong, 518057 (CN)
(72) Inventor: FENG, Haoming, Shenzhen, Guangdong 518057 (CN); YAN, Zheming, Shenzhen, Guangdong 518057 (CN); TU, Haitao, Shenzhen, Guangdong 518057 (CN); HE, Libao, Shenzhen, Guangdong 518057 (CN); CHEN, Jiabao, Shenzhen, Guangdong 518057 (CN)
(74) Representative: Novagraaf International SA
(86) International application number: PCT/CN2022/132559
(87) International publication number: WO 2023/160040

(56) References cited:
- AU-A1- 2019 204 722
- AU-A1- 2019 381 980
- CN-A- 110 800 008
- CN-A- 113 994 324
- CN-A- 114 064 984
- US-A1- 2020 364 205
- US-A1- 2021 149 775

## Description

This application claims priority to Chinese Patent Application No. 202210174690.7, entitled "METHOD AND APPARATUS FOR PROCESSING DATA BASED ON BLOCKCHAIN, DEVICE, AND READABLE STORAGE MEDIUM" filed with the China National Intellectual Property Administration on February 24, 2022.

### FIELD OF THE TECHNOLOGY

The present disclosure relates to the technical field of computers, in particular to a method and an apparatus for processing data based on a blockchain, a device, and a readable storage medium.

### BACKGROUND OF THE DISCLOSURE

A blockchain system is a blockchain network composed of multiple blockchain nodes. Each blockchain node stores the newest on-chain world state for the blockchain network, i.e., the world state composed of the state data owned by each account in the blockchain network after the block of the largest block height in the blockchain is on-chain.

In the current blockchain network, the execution of statements of transactions within the block will modify some of the state data owned by several accounts, so that every time a block is on-chain, there is a corresponding new newest on-chain world state. During consensus, the new block will need to rely on the corresponding newest on-chain world state after its parent block is on-chain to determine its corresponding newest on-chain world state after being on-chain, so current consensus mechanisms tend to allow only one block to perform a consensus. If a consensus mechanism that allows multiple blocks to perform a consensus at the same time is used, it is often impossible to guarantee the consistency of state data of a blockchain system.

### SUMMARY

Embodiments of the present disclosure provide a method and an apparatus for processing data, a device, and a readable storage medium. World states of multiple blocks to be added into a blockchain are capable to be maintained to ensure consistency of state data in a blockchain system.

In one aspect, an embodiment of the present disclosure provides a method for processing data based on a blockchain. The method is executable by a computer device, and comprises: generating an initial block; creating a first world state for the initial block, where: the first world state and a second world state of a parent block of the initial block belong to a chain of world states, and the first world state points to the second world state in the chain of world states; the second world state is a consensus root world state that points to a newest on-chain world state in the chain of world states, in a case that the parent block is a block having a largest height among all blocks in the blockchain; and the newest on-chain world state is a most downstream world state in the chain of world states and records a most recent world state among all blocks in the blockchain; updating the first world state based on transactions in the initial block to obtain a first updated state; constructing a first clean world-state tree for the first updated state based on the chain of world states to obtain an updated first world state comprising the first clean world-state tree; writing a first root of the first clean world-state tree into the initial block to obtain a block to be added into the blockchain; transmitting the to-be-added block to consensus nodes to enable the consensus node to perform verification on the to-be-added block based on the first root through a consensus mechanism; and in a case that a result of the verification indicates that the to-be-added block passes the verification, writing the to-be-added block into the blockchain, and substituting data in the updated first world state for data in world states in the chain of world states sequentially along a forward direction of the chain of world states until the newest on-chain world state is updated to be identical to the updated first world state, where after the substituting, the updated first world state serves as the consensus root world state and points to the newest on-chain world state in the chain of world states.

In another aspect, an embodiment of the present disclosure provides an apparatus for processing data based on a blockchain. The apparatus is deployable on a computer device, and comprises: an initializing module, configured to generate an initial block; a state creating module, configured to create a first world state for the initial block, where: the first world state and a second world state of a parent block of the initial block belong to a chain of world states, and the first world state points to the second world state in the chain of world states; the second world state is a consensus root world state that points to a newest on-chain world state in the chain of world states, in a case that the parent block is a block having a largest height among all blocks in the blockchain; and the newest on-chain world state is a most downstream world state in the chain of world states and records a most recent world state among all blocks in the blockchain; a first state updating module, configured to update the first world state based on transactions in the initial block to obtain a first updated state; a second state updating module, configured to construct a first clean world-state tree for the first updated state based on the chain of world states to obtain an updated first world state comprising the first clean world-state tree; a consensus module, configured to write a first root of the first clean world-state tree into the initial block to obtain a block to be added into the blockchain, and transmit the to-be-added block to consensus nodes to enable the consensus node to perform verification on the to-be-added block based on the first root through a consensus mechanism; and a state substituting module, configured to, in a case that a result of the verification indicates that the to-be-added block passes the verification: write the to-be-added block into the blockchain; and substitute data in the updated first world state for data in world states in the chain of world states sequentially along a forward direction of the chain of world state, until the newest on-chain world state is updated to be identical to the updated first world state, where after the substituting, the updated first world state serves as the consensus root world state and points to the newest on-chain world state in the chain of world states.

In another aspect, an embodiment of the present disclosure provides a computer device, comprising: a processor, a memory and a network interface; the processor being connected to the memory and the network interface, the network interface being configured to provide a data communication function, the memory being configured to store program codes, and the processor being configured to invoke the program code to execute the foregoing method.

In another aspect, an embodiment of the present disclosure provides a computer-readable storage medium, storing a computer program, the computer program when executed by a processor implements the foregoing method.

In another aspect, an embodiment of the present disclosure provides a computer program product, the computer program product including a computer program or computer instructions stored in a computer-readable storage medium, a processor of a computer device reading the computer program or the computer instruction from the computer-readable storage medium, the computer program or the computer instruction when executed by the processor implements the foregoing method.

Herein the chain of world states is established to support simultaneous maintenance on the world states of blocks having different heights, or the world states of blocks in different branches. That is, each time a new block is generated, a world state is created for the new block, and the world state is added into the chain of world states. The most downstream world state in the chain of world states is the newest on-chain world state, which is generated after statements in the transaction(s) in the newest on-chain block have been executed. The second most downstream world state in the chain of world states is the consensus root world state, which is newly verified through the consensus mechanism. Each world state after the consensus root world state in the chain of world states is to be verified through the consensus mechanism. The consensus root world state points to the newest on-chain world state in the chain of world states, and the world state for a block to be verified through the consensus mechanism points to the world state for its parent block. In a case that the parent block has been added into the blockchain, the world state for the to-be-verified block points to the consensus root world state. Thereby, the pointing relationship among the world states forms a chained structure, that is, the chain of world states. No matter how many blocks are to be verified through the consensus mechanism, once any one of these blocks is verified, its world state would be substituted for downstream world states sequentially along a forward direction of the chain of world states, until it becomes the newest on-chain world state. Hence, consistency of state data in the blockchain system is guaranteed.

### BRIEF DESCRIPTION OF THE DRAWINGS

To describe the technical solutions in the embodiments of the present disclosure or in the related art more clearly, the following briefly introduces the accompanying drawings for describing the embodiments or the related art. Apparently, the accompanying drawings in the following description show merely some embodiments of the present disclosure, and a person of ordinary skill in the art may still derive other drawings from the accompanying drawings without creative efforts.
FIG. 1 is a schematic structural diagram of a system of blockchain nodes according to an embodiment of the present disclosure.
FIG. 2a is a schematic structural diagram of data of a world state according to an embodiment of the present disclosure.
FIG. 2b is a schematic structural diagram of data of an account state according to an embodiment of the present disclosure.
FIG. 2c is a schematic diagram of a scenario for managing world states according to an embodiment of the present disclosure.
FIG. 2d is a schematic structural diagram of data in a chain of world states according to an embodiment of the present disclosure.
FIG. 3 is a schematic flowchart of a method for processing data based on a blockchain according to an embodiment of the present disclosure.
FIG. 4a to FIG. 4c are schematic diagrams of scenarios for processing data based on a blockchain according to an embodiment of the present disclosure.
FIG. 5 is a schematic flowchart of a process of updating a first world state according to an embodiment of the present disclosure.
FIG. 6 is a schematic flowchart of a process of constructing a clean world-state tree according to an embodiment of the present disclosure.
FIG. 7 is a schematic structural diagram of an apparatus for processing data based on a blockchain according to an embodiment of the present disclosure.
FIG. 8 is a schematic structural diagram of a computer device according to an embodiment of the present disclosure.

### DESCRIPTION OF EMBODIMENTS

The technical solutions in embodiments of the present disclosure are clearly and completely described in the following with reference to the accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure without making creative efforts shall fall within the protection scope of the present disclosure.

For ease of understanding, a blockchain and related concepts thereof are described below:
Blockchain: the blockchain is a new application mode of distributed data storage, peer-to-peer transmission, consensus mechanisms and other computer technologies such as encryption algorithms. The blockchain is mainly used for organizing data in chronological order and encrypting the data into a ledger so that it cannot be tampered or falsified, while allowing data verification, storage and updating. The blockchain is essentially a decentralized database in which each node stores an identical blockchain. A blockchain network can distinguish nodes as consensus nodes and service nodes, where the consensus nodes are responsible for the consensus of the entire blockchain network. The process that transaction data in the blockchain network are written into the ledger can be as follows: a client sends transaction data to the service node, the transaction data is then passed between the service nodes in the blockchain network in the form of a baton until the consensus node receives the transaction data, the transaction data is then packaged into a block by the consensus node to reach a consensus with other consensus nodes, and after the consensus is passed, the block carrying the transaction data is written into the ledger.

Block: a data packet that carries the transaction data (i.e., transaction statements) on the blockchain network, and a data structure that is tagged with a timestamp and the hash of a previous block. The block is verified through the consensus mechanism of the network such that the transaction in the block is deemed to be valid.

Hash: also known as a message feature value or a feature value. The hash is generated through a hashing algorithm that can convert input data of an arbitrary length fixedly into a cipher and output such cipher. Original input data cannot be retrieved by decrypting the hash, that is, it is a unidirectional cryptographic function. In the blockchain, each block (i.e., a current block) except a genesis block comprises the hash of its predecessor block, and the predecessor block is also known as the parent block of the current block. The hash is a core and a foundation of potentials as well as the most important aspect in the blockchain technology. It preserves authenticity of data that is recorded and viewed and preserves the integrity of the whole blockchain.

Transaction: transaction data sent by a blockchain account, having a transaction hash incorporated as a unique identifier, and comprising an account address identifying the blockchain account sending the transaction.

State snapshot: representing a snapshot of all state data within a certain range, being a hash of a fixed length. When any state data changes in any way, the state snapshot would also change. Thus, it allows checking the integrity of the whole set of state data.

Account: a blockchain account having an account address incorporated as a unique identifier, and comprising a balance as a digital asset of the account in a current world state. Each account has one or more pieces of state data and an account-state root serving as a state snapshot of all pieces of state data.

State data: data of an account stored in the blockchain, such as a quantity of assets belonging to a certain account and another piece of data which a smart contract requires to read or update. Each piece of state data may be represented as a key-value pair.

On-chain: each block comprises data of one or more transactions, and a process of inserting a block, which is verified through the consensus mechanism, into a blockchain data structure at each blockchain node is called adding the block into the blockchain, or on-chain for short.

World state: a panorama comprising persistent data owned by all accounts within the blockchain. Since execution of statements in a transaction modifies the persistent data of one or more accounts, a new world state would be generated each time statement(s) in any transaction within any block has been executed. Hence, the world state of each blockchain node would be updated after a block has been added into the chain. After the same block has been added into the chain at each blockchain node, their world states shall be identical.

MPT: short for Merkle Patricia Trie, a tree structure for organizing state data. The MPT includes nodes of three types: data nodes, expansion nodes, and branch nodes. Each piece of state data comprises a state-data key and a state-data value. The data node is a leaf node of the tree structure, only exists at a bottom of the MPT, and stores actual state-data values. The expansion node is a parent node having only one child node, and comprises a character string, which is of an arbitrary length and represents a part of the state-data key, and a tree-node hash directing to its child node. The branch node may be a parent node of 1 to 16 child nodes and have an array of hashes with a capacity of 16. The 16 positions in the array correspond to 0 to 9 and A to F in the hexadecimal system, and each position may serve as a tree-node hash directing to one child node. Herein the tree-node hash refers to a hash of a child node in the MPT and is stored in the parent node.

State tree: including an account-state tree and a world-state tree in embodiments of the present disclosure. Both state trees utilize the MPT as a data structure for organizing the respective state data in the blockchain and may provide following functions.
(1) Query: searching the state tree for a state-data value by using the state-data key, where a tree-node query source needs to be provided to the state tree. The tree-node query source refers to a data structure helping search the state tree for a tree node quickly by using a tree-node hash serve as a query condition. Each tree node in the state tree is stored as a key-value pair in a database, where a key is the hash of the tree node, and a value is data of the tree node. Hence, the tree node may be used for a fast query in the database based on the tree-node hash. Since each parent node in the state tree comprises the tree-node hash of each child node thereof, all its child nodes can be found from the databased based on the parent node.
(2) Update: updating the state-data value in the state tree by using the state-data key.
(3) Obtaining a state-tree root: calculating the hash of the root (node) of the state tree.
(4) Submission: writing each tree node of the state tree into a tree-node update cache. Each tree node in the state tree is stored in the database as a key-value pair, where a key is the hash of the tree node, and a value is data of the tree node. Therefore, when a submitting operation is performed on the state tree, there is a data structure that receives and stores the above key-value pair, and such data structure is called the tree-node update cache.

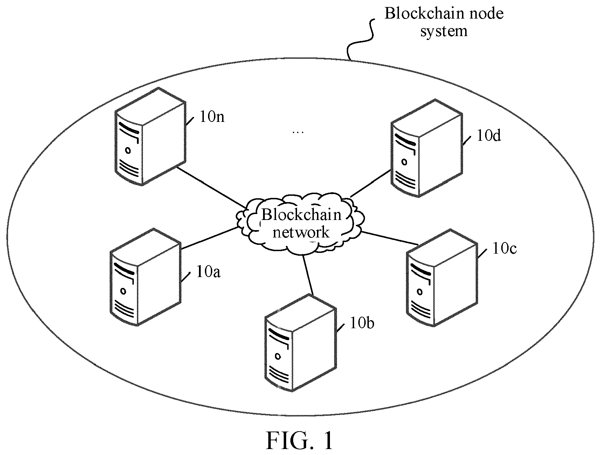

Reference is made to FIG. 1, which is a schematic structural diagram of a blockchain node system according to an embodiment of the present disclosure. The blockchain node system as shown in FIG. 1 may correspond to a blockchain network, and the blockchain network may include, but is not limited to, a blockchain network corresponding to a consortium blockchain. The blockchain node system refers to a system for conducting data sharing between blockchain nodes and blockchain nodes, and the blockchain node system may include a plurality of blockchain nodes, and the plurality of blockchain nodes may specifically include blockchain nodes 10a, blockchain nodes 10b, blockchain nodes 10c, blockchain nodes 10d, ..., blockchain nodes 10n. Each blockchain node in its normal operation may receive data transmitted from outside and add a block into the blockchain based on the received data. The node may further send data to outside. In order to ensure data exchange between different blockchain nodes, a data connection may exist among all the blockchain nodes, for example, a data connection exists between the blockchain node 10a and the blockchain node 10b, a data connection exists between the blockchain node 10a and the blockchain node 10c, and a data connection exists between the blockchain node 10b and the blockchain node 10c.

Data or block may be transmitted among the blockchain nodes via the above data connection(s). The data connection(s) for blockchain network may be implemented among the blockchain nodes based on node identifiers. Each blockchain node in the blockchain network has a respective node identifier, and each of the above blockchain nodes may store the node identifier of each blockchain node connected to it, so that the acquired data or the generated block can be broadcast to another blockchain node based on the node identifier of the other blockchain node. For example, the blockchain node 10a may maintain a list of node identifiers as shown in Table 1, and node names and node identifiers of other nodes are stored in the list.

**Table 1**

| Node name | Node identifier |
|---|---|
| Node 10a | 117.114.151.174 |
| Node 10b | 117.116.189.145 |
| Node 10c | 117.114.151.183 |
| Node 10d | 117.117.125.169 |
| ... | ... |
| Node 10n | 117.116.189.125 |

The node identifier may be an Internet Protocol (IP) address in a network or of another type as long as it can be used for identifying the nodes in the blockchain network. The IP address is taken as an example as illustrated in Table 1. In such example, the blockchain node 10a may send information (e.g., a block) to the blockchain node 10b based on the node identifier 117.116.189.145, and the blockchain node 10b may determine that the information is sent by the blockchain node 10a based on the node identifier 117.114.151.174.

Before a block is added into the blockchain, it needs to be verified by consensus nodes through a consensus mechanism. The block can be added to the blockchain only when the verification is successful. It will be appreciated that when the blockchain is used in some scenarios, such as in government or a commercial organization, it is possible that not every participating node in the blockchain (i.e., blockchain nodes in the blockchain node system) has sufficient resources and necessity for becoming the consensus node in the blockchain. For example, in the blockchain node system as shown in FIG. 1, the blockchain node 10a, the blockchain node 10b, the blockchain node 10c, and the blockchain node 10d may serve the consensus nodes in such blockchain node system. The consensus nodes in the blockchain node system participate in the verification through the consensus mechanism, i.e., performing consensus processing on a block (which comprises a batch of transactions). The consensus processing may include generating a block and voting on a block. Non-consensus nodes, on the other hand, do not participate in the verification through the consensus mechanism. The non-consensus nodes help transmit a block and information about the voting, help synchronize states among the nodes, and the like.

The blockchain node may comprise the following functional modules.

Transaction pool: Each blockchain node receives a transaction sent by a user and caches such transaction in the transaction pool. When a blockchain node is selected as a block-production node according to a consensus mechanism, the blockchain node creates a new block in its internal memory, and the transaction(s) in the transaction pool are packed into the new block.

Consensus module: The transactions are packed into a candidate block, and a consensus may be reached on the candidate block among different blockchain nodes through the consensus mechanism, such that to the new block can be generated.

Smart contract container: One or more statements in each transaction within a block need to be executed as defined in the consensus mechanism, and an essence of such process is executing a smart contract concerning the transaction. State data may be read or updated during the execution of the smart contract, and the smart contract container provides an environment for executing the smart contract.

World state management: Such module is responsible for maintaining and managing the world state(s) of the block(s) in each consensus processing.

Key-value database: Such module stores data persistently in a form of key-value pairs, where a value can be quickly fetched based on a corresponding key. Herein the key-value database is responsible for store data of each block and tree nodes persistently. Storage of the tree nodes refers to that a hash of each tree node of the state tree serves as the key and each tree node serves as the corresponding value. Hence the tree node can be quickly fetched based on its tree-node hash.

A means of data connection is not limited herein. It may be a direct or indirect connection by means of wired communication, a direct or indirect connection by means of wireless communication, or anther connection means.

The method for processing data according to embodiments of the present disclosure may be executed by a computer device. The computer device includes, but is not limited to, a blockchain node (which may be a server or a terminal). The server may be a stand-alone physical server, a cluster of servers, a distributed system composed of multiple physical servers, or a cloud server which provides a cloud service, a cloud database, cloud computing, a cloud function, cloud storage, a network service, cloud communication, a middleware service, a domain name service, a security service, CDN, or another basic cloud computing service such as a big data and artificial intelligence platform. The terminal may be a smartphone, a tablet computer, a notebook computer, a desktop computer, a smart speaker, a smartwatch, or the like, which is not limited herein.

Embodiments of the present disclosure may be applied to various scenarios, including but not limited to, cloud technology, artificial intelligence, intelligent transportation, aided driving, or the like.

Detailed description in embodiments of the present disclosure may concern state data or data related to the state data. User permission or consent is required when these embodiments are applied to an actual product or an actual technique. Collection, usage, and processing of such data need to comply with relevant laws, regulations, and standards of relevant countries and regions.

As shown in FIG. 1, the block-production node in the blockchain network, for example, the blockchain node 10a in the forgoing blockchain node system, generates an initial block, and then create a first world state for the initial block. The first world state points to a second world state in a chain of worlds states, and the second world state is a world state for a parent block of the initial block. The first world state and the second world state are both in the chain of world states. The second world state is a consensus root world state, in a case that the parent block is a block having a largest block height among blocks which have been added into the blockchain. The consensus root world state points to a newest on-chain world state in the chain of world states, and the newest on-chain world state is the most downstream world state in the chain of world states. The newest on-chain world state records a newest world state for all blocks in the blockchain. Then, the first world state is updated based on transactions in the initial block to obtain a first updated state, and a clean current state tree is constructed for the first updated state based on the chain of world states to obtain an updated first world state comprising the first clean world-state tree. A first root of the first clean world-state tree is written into the initial block to obtain a block to be added into the blockchain, and such block is transmitted to consensus nodes, such that the consensus nodes can verify such block based on the first root through a consensus mechanism and thereby obtain a consensus result. In a case that the consensus result indicates that the to-be-added block passes the verification, such block is written into the blockchain, and the updated first world state is substituted for world states in the chain of world states sequentially along a forward direction of the chain of world states until the newest on-chain world state is updated to be identical to the updated first world state. After such substitution, the updated first world state serves as the consensus root world state and points to the newest on-chain world state in the chain of world states.

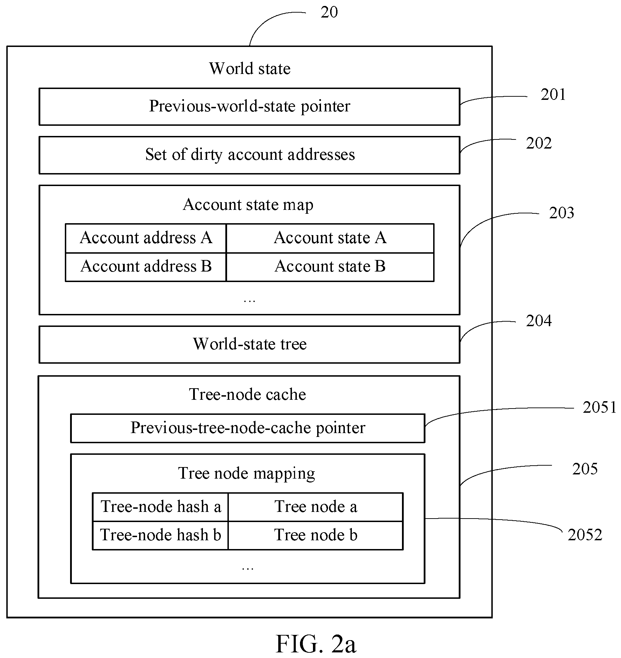

Reference is made to FIG. 2a for better understanding the above process of managing the world states. FIG. 2a is a schematic structural diagram of data in a world state according to an embodiment of the present disclosure. As shown in FIG. 2a, a world state 20 may comprise a previous-world-state pointer 201, a set 202 of dirty account addresses, an account-state map 203, a world-state tree 204, and a tree-node cache 205. The previous-world-state pointer 201 points to a world state immediate previous to the world state 20, and such previous world state may be positioned in an internal memory based on a direction of the previous-world-state pointer 201. The previous-world-state pointer of the newest on-chain world state is empty. The set 202 of dirty account addresses is a set of account addresses, each of which corresponds to a respective account state in the world state 20, such account state has been updated but the update has not yet been recorded in the world-state tree 204. The account-state map 203 is a mapping structure between account addresses and account states. Through the account-state map 203, the account state can be quickly found based on their account address. The world-state tree 204 refers to an MPT data structure organized with the account addresses as the keys and their corresponding account-state roots as the values. The account-state root is a hash of a root node of an account-state tree comprised in the account state mapped to the corresponding account address. The tree-node cache 205 comprises a previous-tree-node-cache pointer 2051 and a tree-node map 2052. The previous-tree-node-cache pointer 2051 points to the tree-node cache of the previous world state, and the previous-tree-node-cache pointer in the tree-node cache of the newest on-chain world state points to a tree-node storage in a key-value database. The tree-node map 2052 is a mapping structure mapped between tree-node hashes and corresponding tree nodes. Through the tree-node map 2052, the tree nodes can be quickly found based on their tree-node hashes. In the world state 20, the tree-node cache 205 serve as the tree-node query source for the world-state tree 204 and for the account-state tree of each account state in the account-state map 203. The world-state tree 204 and the account-state tree of each account state can search the tree-node map in the tree-node cache for a tree node by using a corresponding tree-node hash. In a case that the tree node is not found, a previous tree-node cache to which the previous-tree-node-cache pointer points is positioned in the internal memory, and the tree-node map in the previous tree-node cache is then searched based on the tree-node hash for the tree node. The further previous tree-node cache would be positioned in a case the tree node is still not found. Such process would be repeated until the previous-tree-node-cache pointer of the newest positioned tree-node cache points to the tree-node storage in the key-value database. In such case, the tree-node storage is further searched based on the tree-node hash for the tree node. The tree-node cache 205 further serves the tree-node update cache for the world-state tree 204 and the account-state tree of each account state in the account-state map 203. When submission operation is performed on the world-state tree 204 or the account-state tree, the tree-node map in the tree-node cache is updated by using a tree-node hash as the key and using a tree node as the value.

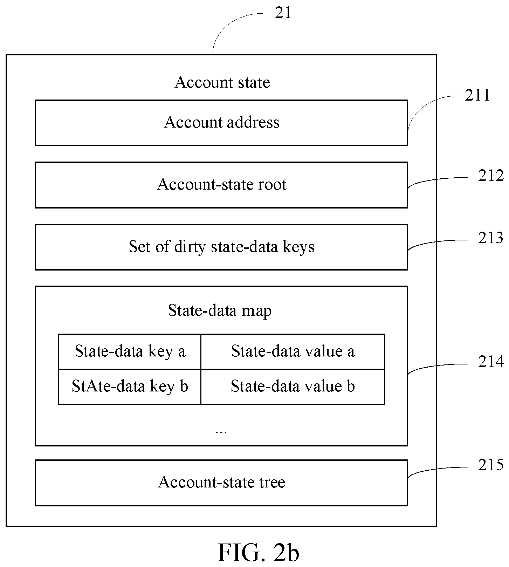

Reference is further made to FIG. 2b, which is a schematic structural diagram of an account state according to an embodiment of the present disclosure. As shown in FIG. 2b, an account state 21 may comprise an account address 211, an account-state root 212, a set 213 of dirty state-data keys, a state-data map 214, and an account-state tree 215. The account address 211 is a unique identifier for an account. The account-state root 212 is the root of the account-state tree 215, that is, a hash of the root node of the account-state tree. The set 213 of dirty state-data keys is a set of state-data keys in the account state 21, each of which has been updated but the update has not been recorded into the account-state tree 215. The state-data map 214 is a mapping structure between state-data keys and corresponding state-data values. Through the state-data map 214, the state-data values can be quickly found based on the state-data keys. The account-state tree 215 is an MPT data structure organized with the state-data keys as keys and the state-data values as values.

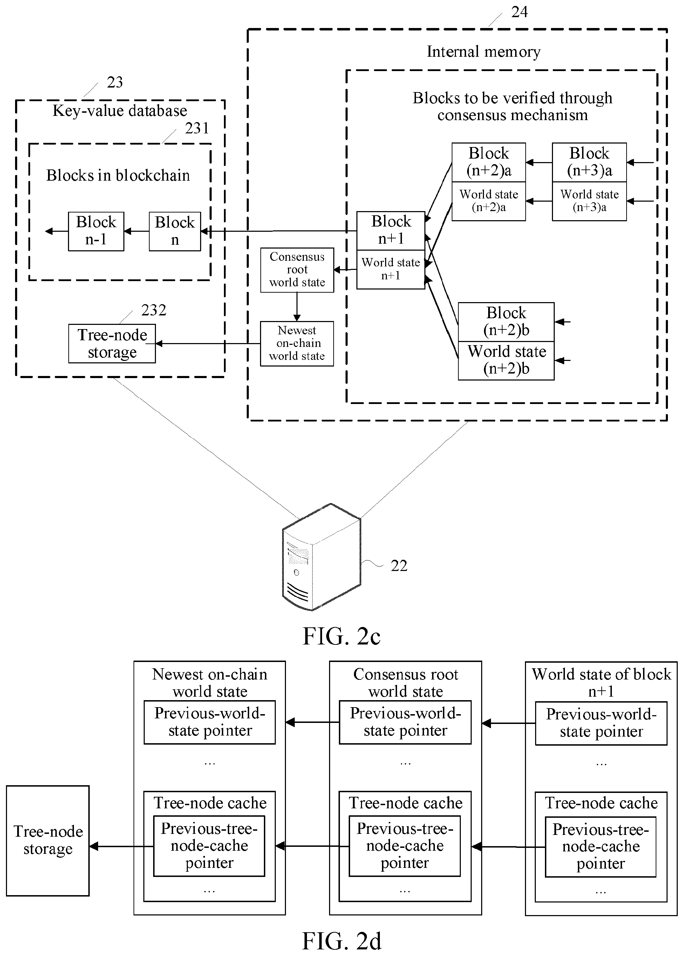

Herein the world state may be constructed by the foregoing structure as shown in FIG. 2a, the account state may be constructed by the foregoing structure as shown in FIG. 2b, and the constructed account state and world state are managed through the method according to embodiments of the present disclosure. Reference is made to FIG.2c for ease of understanding. FIG. 2c is a schematic diagram of a scenario for managing world states according to an embodiment of the present disclosure. As shown in FIG. 2a, a key-value database 23 of a block-production node 22 (which may be an arbitrary blockchain node in the blockchain node system as shown in FIG. 1, e.g., the blockchain node 10b) stores a blockchain data structure 231, and blockchain data structure 231 comprises all blocks that have been added into the blockchain. In addition, the key-value database 23 comprises a tree-node storage 232. All tree node and their respective hashes in the account-state tree of each account in the blockchain network as well as in the world-state tree of the newest on-chain world state are stored in the tree-node storage 232, and such storage is implemented by using the tree-node hashes as the keys and the tree nodes as the values. The newest on-chain world state is a world state generated when statements in the transaction(s) within the on-chained newest block have been executed.

As shown in FIG. 2c, the block-production node may maintain, in an internal memory 24, one or more blocks which have different heights and are to be verified through the consensus mechanism, e.g., block n+1 having a height of n+1, block (n+2)a having a height of n+2, etc. There may be different block branches sharing the identical block height(s) when executing the consensus mechanism, e.g., block (n+2)a and block (n+2)b having a height of n+2. Eventually, only one branch would pass the verification through the consensus mechanism among the blockchain nodes of the blockchain network, then be added into the blockchain, and thereby stored into the key-value database 21. In addition, different world states are maintained in the internal memory 24, which comprise not only the newest on-chain world state, but also the consensus root world state and the world state for the block to be verified through the consensus mechanism. The consensus root world state is the world state for a block which is most recently verified through the consensus mechanism. The world state for the block to be verified through the consensus mechanism refers to, as the name implies, a world state created for a block to be verified through the consensus mechanism, and represents the query source and the update cache for the state data during and after the execution of statements in transactions within such block. As can be seen from FIG. 2c, each world states corresponding to the blocks to be verified through the consensus mechanism points to the world state for its parent block in the chain of world states. The block-production node is capable to fetch the world state for the parent block via the chain the chained relationship of the world state for a block to be verified through the chain of world states, and then continue to fetch the world state for the parent block of the parent block through the chain of world states. For example, world state (n+2)a for block (n+2)a points to world state n+1 for its parent block n+1. After acquiring world state (n+2)a for block (n+2)a, a block-production node 20 traces from world state (n+2)a along the chain of world states, so as to acquire world state n+1 which follows in the chain. When the parent block of a block to be verified through the consensus mechanism is a block passes the last verification through the consensus mechanism, the world state for such to-be-verified block points to the consensus root world state, so the world state for each to-be-verified block eventually points to the consensus root world state is in the chain. The consensus root world state points to the newest on-chain world state in the chain. After one block passes the verification, the world state for such block would serve as a new consensus root world state, and the original the consensus root world state may be discarded. After one block is added into the blockchain, it is necessary to update data in the newest on-chain world state to a "new" newest on-chain world state of which a storage address in the internal memory is still the same as that of the original newest on-chain world state.

The chain of world states may be implemented through previous-world-state pointers and previous-tree-node-cache pointers of the world states. Each world state points to it immediate previous world state in the chain via its previous-world-state pointer, and its tree-node cache points to the tree-node cache of its immediate previous world state via its previous-tree-node-cache pointer. The previous-world-state pointer of the most downstream world state (i.e., the last world state along the pointing directions) is empty (i.e., points to null), and the previous-tree-node-cache pointer in the tree-node cache of the most downstream world state points to the tree-node storage in the key-value database. Thereby, the chain of world states is formed. Reference is made to FIG. 24 for ease of understanding. FIG. 2d is a schematic structural diagram of a chain of world states according to an embodiment of the present disclosure. As shown in FIG. 2d, in the chain of world states, the most downstream world state is the newest on-chain world state which has no previous world state, so the previous-world-state pointer of the newest on-chain world state is empty. In addition, the previous-tree-node-cache pointer of the newest on-chain world state is in capable to point to the tree-node cache of a previous world state, and hence it points to the tree-node storage (e.g., the tree-node storage 232 as shown in FIG. 2c). The second most downstream world state (i.e., the penultimate world state along the pointing directions) in the chain of world states is the consensus root world state. An immediate previous world state of the consensus root world state is the newest on-chain world state, and hence its previous-tree-node-cache pointer points to the tree-node cache of the newest on-chain world state. The third most downstream world state (i.e., the antepenultimate world state along the pointing directions) in the chain is the world state for a block to be verified through the consensus mechanism, and its previous-world-state pointer and its previous-tree-node-cache pointer of the tree-node cache point to the world state of its parent block and the tree-node cache of the world state of its parent block, respectively. The previous-world-state pointers and the previous-tree-node-cache pointers of the world states of two different blocks to be verified through the consensus mechanism may be permitted to point to the same previous world state and the tree-node cache of such previous world state. That is, the chain of world states may have branches in an upstream of the consensus root world state.

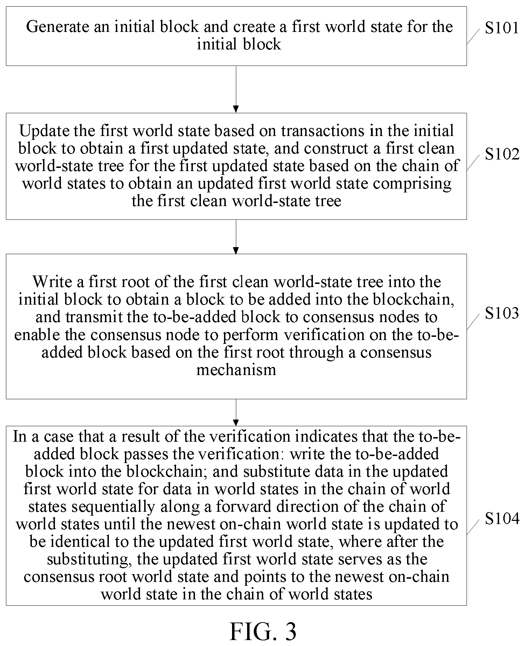

The world state for the block capable to pass the verification through the consensus mechanism would eventually be submitted to the newest on-chain world state, i.e., its data would be substituted for data in the newest on-chain world state and. When the to-be verified block passes the verification, its world state thereof would become the new consensus root world state and points to the newest on-chain world state. Reference is made to FIG. 3 to facilitate understanding of a process of managing world states according to embodiments of the present disclosure. FIG. 3 is a schematic flowchart of a method for processing data based on a blockchain according to an embodiment of the present disclosure. The method is executable by a block-production node (e.g., an arbitrary blockchain node in the blockchain node system 10 as shown in FIG. 1). Hereinafter the method being executed by the block-production node would be illustrated as an example. A method for processing data based on a blockchain may include following steps S101-S104.

S101: Generate an initial block and create a first world state for the initial block.

Each blockchain node may receive data of transaction(s), and then the data of transaction(s) is cached into the transaction pool. The block-production node may be selected in the blockchain network based on a consensus mechanism. When a blockchain node is selected as the block-production node, a new block is created in its internal memory, and the new block comprises a hash of a parent block of the new block. The parent block can be fetched by using its hash. Then, the block-production node may pack the transactions in the transaction pool into the new block, so as to obtain the initial block. Afterwards, the block-production node may create the first world state for the initial block.

In embodiments of the present disclosure including the embodiments of both the claims and the specification (hereinafter referred to as "all embodiments of the present disclosure"), a process of creating the first world state for the initial block may be as follows. The block-production node first acquires a second world state for the parent block, and then a world-state initializing process is started to on a basis of the second world state in order to obtain the first world state. In a case that the parent block is a block which has already been written into the blockchain, the parent block of the initial block is actually the most recent block which has been added into the blockchain, and the second world state for the parent block is the a world state which is most recently verified through the consensus in the mechanism. That is, the second world state for the parent block in such case is the consensus root world state as shown in FIG. 2c. In a case that the parent block of the initial block has not been written into the blockchain, the parent block of the initial block is a block currently to be verified through the consensus mechanism, and the world state for the parent block is the world state for such to-be-verified block. Taking FIG. 2c as an example, the world state for the parent block may be world state n+1. Both the first world state and the second world state are in the chain of world states, and the most downstream world state in the chain of world states is the newest on-chain world state which records the world state for a block most recently added into the blockchain. The second most downstream world state is the consensus root world state, and the consensus root world state points to the newest on-chain world state. In other words, the foregoing second world state may be the second most downstream world state in the chain of world states or may be a world state after the second most downstream world state. The first world state is next to the second world state in upstream of the chain of world states.

In all embodiments of the present disclosure, creating the first world state for the initial block may comprise: creating an initial world state for the initial block, where the initial world state comprises a first previous-world-state pointer and a first tree-node cache, the first tree-node cache comprises a first previous-tree-node-cache pointer; and directing the first previous-world-state pointer toward the second world state of the parent block, and directing the first previous-tree-node-cache pointer toward a second tree-node cache comprised in the second world state, to obtain the first world state. In such case, a structure of the first world state may still refer to the world state 20 as shown in FIG. 2a. At such time, the block-production node merely initializes the first previous-world-state pointer and the first previous-tree-node-cache pointer of the first world state. The set of dirty account addresses, the account-state map, the world-state tree, the tree-node map, and the like may be configured to be empty in initialization or may be added into the first world state in subsequent steps, which is not limited herein. Hereinafter it is taken as an example that the world state has the structure as shown in FIG.2a when being created, and its component is an empty set by default when there is no corresponding data.

S102: Update the first world state based on transactions in the initial block to obtain a first updated state, and construct a first clean world-state tree for the first updated state based on the chain of world states to obtain an updated first world state comprising the first clean world-state tree.

Some state data of one or more accounts in the blockchain may be modified when statements in the transaction(s) of the initial block are executed. The block-production node may execute statements in all transactions in the initial blocks sequentially, determine each piece of state data, which is required to be modified after execution of statements in all transactions, as to-be-updated data, and then update the to-be-updated data in the first world state so as obtain the first updated state. In such case, the account-state map of the first updated state comprises the account address and the post-update account state for each account required to be updated in the blockchain, and the account address and the post-update account state for the same account are mapped to each other. Thereby, when accessing the first world state in a subsequent step, the block-production node can acquire the post-update account state of the account quickly from the account-state map by using the account address of such account. Moreover, the set of dirty account addresses in the first updated state comprises the account addresses of the accounts of which state data is updated due to executing statement in the transactions in the initial block. The first clean world-state tree (i.e., a world-state tree with no dirty account address remains in its world state) of the first updated state can be then constructed by using the set of dirty account addresses and the account-state map of the first updated state.

At such time, the world-state tree in the first updated state is empty, that is, the world-state tree in the first updated state has not been constructed yet. The block-production node may find the second world state to which the first previous-world-state pointer in the first updated state points, obtain a clean world-state tree of the second world state as a second clean world-state tree, then constructs a second world-state tree for the first updated state based on the first tree-node cache and a current state-tree root, and add the second world-state tree into the first updated state to obtain a second updated state. All dirty account addresses in the second updated state are then resolved to obtain the updated first world state.

S103: Write a first root of the first clean world-state tree into the initial block to obtain a block to be added into the blockchain, and transmit the to-be-added block to consensus nodes to enable the consensus node to perform verification on the to-be-added block based on the first root through a consensus mechanism.

The first root of the first clean world-state tree refers a hash of the root (i.e., the root node) of the first clean world-state tree. In such case, the first root may serve as a state snapshot of the state data of all accounts in the blockchain network after statements in the transactions of the initial block have been executed. After the first root is written to the initial block, the block-production node implements packaging of the block, that is, a block to be added into the blockchain is obtained. Next, the block-production node transmits the to-be-added block to the consensus node in the blockchain network via a Peer to Peer (P2P) network. The consensus node may first create (i.e., initialize) a world state for the to-be-added block, then perform the same processes in steps S102 to S103 on the newly created world state, so as to obtain the first clean world-state tree for the constructed world state. Then, the consensus node acquires the hash of the root of its own the first clean world-state tree as a verification root. The consensus node compares the verification root with the first root in the to-be-added block, determines that the to-be-added block passes the verification in a case that the verification root and the first root are identical, and determines that the to-be-added block fails the verification in a case that the verification root and the first root are different. In the latter case, it indicates the consensus on the to-be-added block fails.

S104: in a case that a result of the verification indicates that the to-be-added block passes the verification: write the to-be-added block into the blockchain; and substitute data in the updated first world state for data in world states in the chain of world states sequentially along a forward direction of the chain of world states until the newest on-chain world state is updated to be identical to the updated first world state, where after the substituting, the updated first world state serves as the consensus root world state and points to the newest on-chain world state in the chain of world states.

In the case that the to-be-added block passes the verification, the block-production node and other blockchain nodes in the blockchain network write the to-be-added block into the blockchain. As mentioned above, the newest on-chain world state is also changed when the new block is added into the blockchain, and hence the block-production node needs to substitute data of the updated first world state for data of world states in the chain along the forward direction of the chain, until data of the newest on-chain world state is identical to that of the updated first world state. After the substitution, the updated first world state serves as the new consensus root world state, and the first previous-world-state pointer in such new consensus root world state is switched from pointing to the world state for the corresponding parent block to pointing to the newest on-chain world state, and the first previous-tree-node-cache pointer in such new consensus root world state is also switched to pointing to the tree-node cache in the newest on-chain world state. Taking the chain of world states as shown in FIG. 2c as an example, after block n+1 passes the verification, the block-production node 22 may substitute data of world state n+1 for data of the consensus root world state, and then data of the consensus root world state is substituted for data of the newest on-chain world state, that is, the newest on-chain world state is updated. Once the foregoing substitution is completed, world state n+1 is determined to serve as the new consensus root world state, and its pointers originally pointing to the consensus root world state would be switched to pointing to the updated newest on-chain world state. A storage address of the updated newest on-chain world state is identical to that the original newest on-chain world state. The updated newest on-chain world state represents the world state after execution of statements in the transactions of block n+1. In all embodiments of the present disclosure, the original consensus root world state may be discarded after the substitution.

In all embodiments of the present disclosure, after the data of the updated first world state is finally substituted for the data of the newest on-chain world state, the block-production node may submit the updated newest on-chain world state to the tree-node storage. Since the tree-node storage is a key-value database, such process may be regarded as updating the tree-node database to comprise the data of the newest on-chain world state. In all embodiments of the present disclosure, the submission may comprise: resolving, after the substituting, all dirty account addresses in the newest on-chain world state to obtain a clean newest on-chain world state, where a tree-node cache in the clean newest on-chain world state comprises a first tree-node map; updating a tree-node database to comprise tree-node hashes and tree nodes in the first tree-node map; and emptying a set of dirty account addresses, an account-state map, and the first tree-node map, which are in the clean newest on-chain world state.

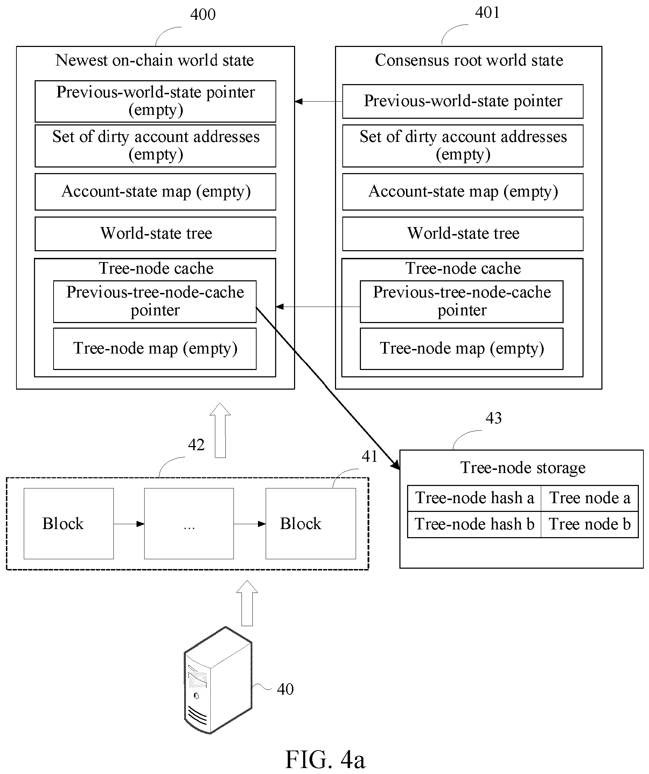

Reference is made to FIG. 4a to FIG. 4c to facilitate understanding the above process. FIG. 4a to FIG. 4c are schematic diagrams of scenarios for processing data based on a blockchain according to an embodiment of the present disclosure. As shown in FIG. 4a, in a block-production node 40 (which may be the block-production node 22 as shown in FIG. 2c), a block 41 is a newest block added into a blockchain 42, and a newest on-chain world state 400 records a panorama, which comprises state data of all accounts in the blockchain network after a block 42 has been added into the blockchain. At such time, besides the previous-world-state pointer being empty, the set of dirty account addresses, the account-state map, and the tree-node map are all empty sets in the newest on-chain world state 400. The world-state tree in the newest on-chain world state 400 is a world-state tree corresponding to all state data in the blockchain at such time, and the previous-tree-node-cache pointer of the newest on-chain world state 400 points to the tree-node storage 43. Each tree node in the world-state tree of the newest on-chain world state 400 and its respective tree-node hash are stored in the tree-node storage 43. In addition, the internal memory of the block-production node 40 also comprises the consensus root world state 402, which represents the world state after the block 41 passes the verification and is committed, and the immediate downstream world state of (i.e., the world state regarded as previous to) the consensus root world state 402 in the chain is the newest on-chain world state 400. As can be seen from FIG. 4a, the previous-world-state pointer of the consensus root world state 402 points to the newest on-chain world state 400, and the previous-tree-node-cache pointer of the consensus root world state 402 points to the tree-node cache 4005.

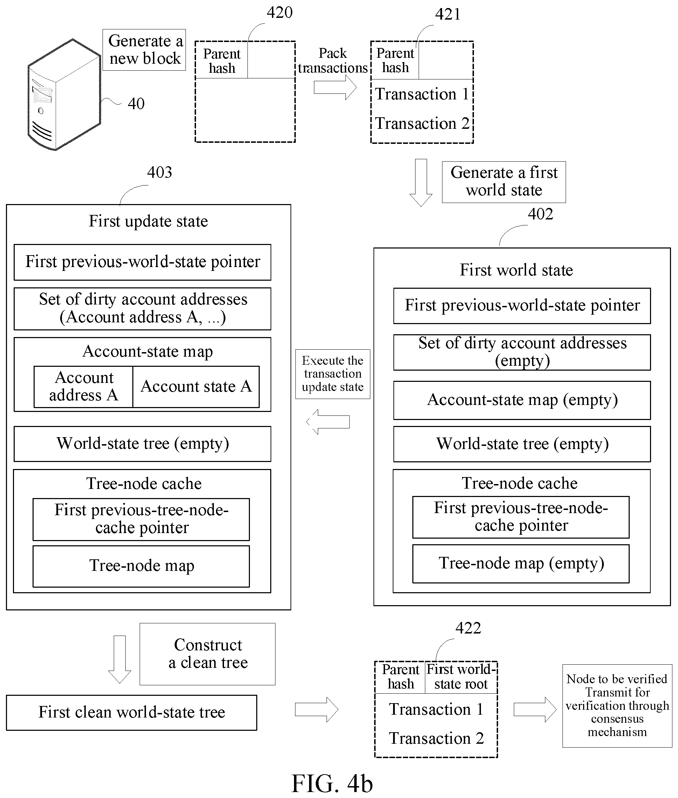

Reference is further made to FIG. 4b to facilitate better illustration of the method. It is assumed that there is no to-be-verified block currently. Upon receiving a block-production command, the block-production node 40 generates a new block 420 of which the parent block is block 41, and the hash of the block 41 is incorporated into the new block 420. Then, the block-production node 40 packs one or more the transactions in the transaction pool into the new block 420, so as to obtain the initial block 421. Afterwards, the block-production node 40 may construct the first world state 402 for the initial block 421, and the first previous-world-state pointer in the first world state 402 need point to a second world state for the parent block of the initial block 421. Because the parent block of the initial block 421 has been added into the blockchain, the second world state is determined to be the consensus root world state 401, thus the first previous-world-state pointer of the first world state 402 points to the consensus root world state 401, and the first previous-tree-node-cache pointer points to the tree-node cache of the consensus root world state 401. In such case, other components such as the set of dirty account addresses, the world-state tree, etc., of the first world state 402 are all empty sets. Then, the block-production node 40 executes statements in the one or more transactions in the initial block 421, and the first world state 402 is updated to obtain a first updated state 403 through executing the statements in the transactions. Such update refers to that the account address(es) of the account(s) which are required to be updated and the corresponding account state(s) are written into the account-state map of the first world state 402, and such account address(es) are added into the set of dirty account addresses of the first world state 402. For example, execution of statement(s) in transaction 1 leads to a change of the state data of account A, and hence the account state of account A needs to be updated accordingly. It is assumed that the account state after such update is account state A. The block-production node 40 writes account address A corresponding to account A into the set of dirty account addresses of the first world state 402, and then add a mapping relationship between account address A and account state A into the account-state map of the first world state 402. The first updated state 403 is obtained when statements in all transactions of the initial block 421 have been executed. At such time, the world-state tree of the first updated state 403 has not yet been constructed, and hence the block-production node 40 would construct the first clean world-state tree for the first updated state 403, and then add a state-tree root of the first clean world-state tree, as the first root, into the initial block 421. Thereby, the block 422 to be added into the blockchain is obtained. Afterwards, the block-production node may transmit the to-be-added block 422 to the consensus nodes in the blockchain network, such that the consensus node can verify the to-be-chained block 422 based on the first root through the consensus mechanism and thereby obtain a consensus result.

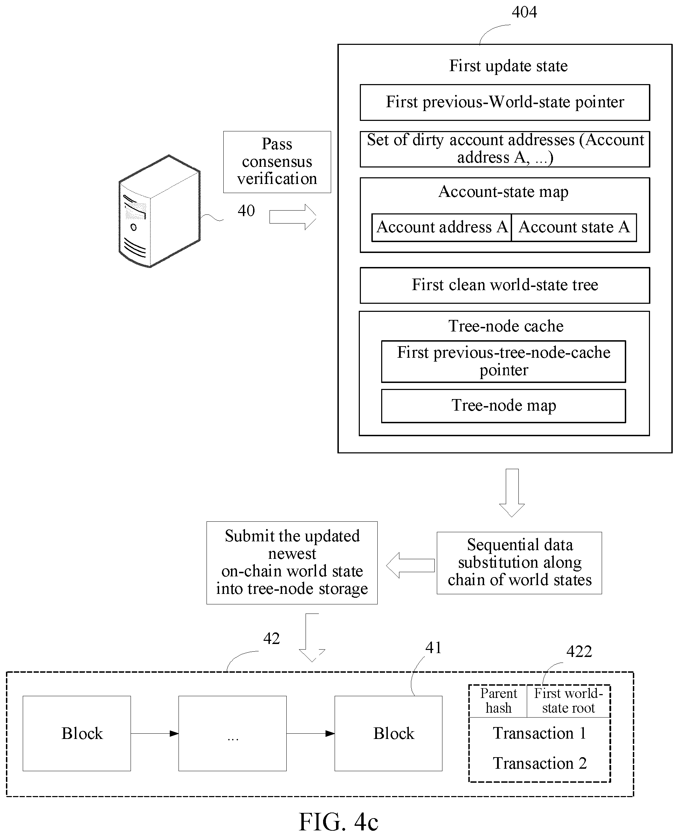

Reference is further made to FIG. 4c. As shown in FIG. 4c, the consensus result indicates passing the verification. At such time, the world state for the to-be-added block 422 in the block-production node 40 is the updated first world state 404 comprising the first clean world-state tree, and the block-production node 40 substitutes data of the updated first world state 404 for data of the newest on-chain world state along the chain of world states. That is, data of the updated first world state 404 is first substituted for data of the consensus root world state 401, and then data of the consensus root world state is submitted for the data of the newest on-chain world state 400, and finally the newest on-chain world state is submitted to the tree-node storage 43. The to-be-added block 422 may be written into the blockchain 42 to become the block that is most recently added into the blockchain. In such case, the updated first world state 404 is determined to serve as the new consensus root world state, and the block-production node 40 switches the first previous-world-state pointer of the updated first world state 404 to the updated newest on-chain world state, and switches the first previous-tree-node-cache pointer of the updated first world state 404 to the tree-node cache of the updated newest on-chain world state.

With the method according to embodiments of the present disclosure, there is no need to record old values of the state data before the change when the state data is updated due to execution the statements in the block, and there is no need to perform a rollback operation on the state data for execution of the statements in transaction fails. System overhead is reduced.

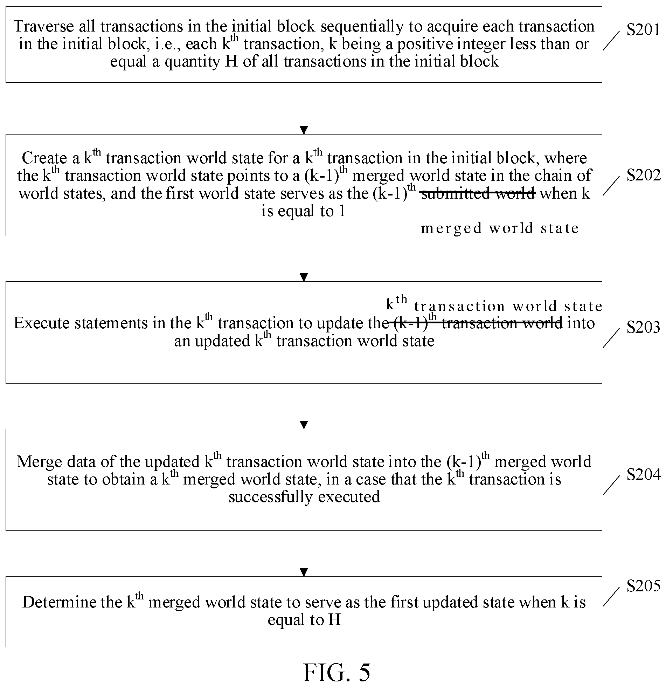

Reference is made to FIG. 5, which is a schematic flowchart of a process for updating a first world state based on transactions according to an embodiment of the present disclosure. The process is a feasible implementation of step S102 as show in FIG. 3, i.e., of updating the first world state based on the transactions in the initial block to obtain the first updated state. The method is executable by a block-production node (e.g., an arbitrary blockchain node in the blockchain node system 10 as shown in FIG. 1). Hereinafter it is taken as an example that the process is executed by the block-production node. The process may at least include following steps S201 to S205.

S201. Traverse all transactions in the initial block sequentially to acquire each transaction in the initial block, i.e., each k^{th} transaction, k being a positive integer less than or equal a quantity H of all transactions in the initial block.

When the initial block comprises a plurality of transactions, the block-production node traverses all transactions in the initial block sequentially to acquire a 1^{st} transaction, then executes the 1^{3t} transaction, then updates the first world state based on a result of executing statement(s) in the 1^{st} transaction to obtain a 1^{st} merged world state, then acquires a 2^{nd} transaction, executes the 2^{nd} transaction, then updates the 1^{st} merged world state based on a result of executing statement(s) in the first transaction to obtain the 2^{nd} merged world state, and so on, until all the transactions in the initial block have been processed. Thereby, the first updated state is obtained. Hereinafter an example of processing the k^{th} transaction is illustrated for ease of understanding.

S202: Create a k^{th} transaction world state for a k^{th} transaction in the initial block, where the k^{th} transaction world state points to a (k-1)^{th} merged world state in the chain of world states, and the first world state serves as the (k-1)^{th} merged world state when k is equal to 1.

The block-production node first creates the k^{th} transaction world state with respect to the k^{th} transaction, and the (k-1)^{th} merged world state can be regarded as a world state previous to the k^{th} transaction world state. Creation of the k^{th} transaction world state may refer to the foregoing creation of the first world state in step S101 and is not illustrated herein. The k^{th} transaction world state points to the (k-1)^{th} merged world state in the chain of world states. The previous world state of the 1^{st} transaction world state is the first world state.

S203: Execute statements in the k^{th} transaction to update the k^{th} transaction world state into an updated k^{th} transaction world state.

As can be seen from the structure of the account state as shown in FIG. 2b, the k^{th} transaction world state comprises the account-state map and the set of dirty account addresses, which are currently both empty. In order to execute statement(s) (e.g., in a smart contract) of the k^{th} transaction, the block-production node needs to read and/or update the state data of an account, and hence the block-production node determines target data of a query or an update. The target data of the query may comprise an address of an account which is to be queried and a state-data key which is to be queried. The target data of the update may comprise an address of an account which is to be updated, a key of state data which is to be updated, and a value of the state data which is to be updated. The block-production node may update the k^{th} transaction world state based on target data of the update or search the k^{th} transaction world state for the target data of the query.

In all embodiments of the present disclosure, executing statements in the k^{th} transaction to update the k^{th} transaction world state into the updated k^{th} transaction world state comprises: executing statements in the k^{th} transaction to determine data to be updated in the k^{th} transaction, i.e., the to-be-updated data comprises the address of the to-be-updated account, the key of to-be-updated state data, and the value of the to-be-updated state data; acquiring an account state, which is mapped to the address of the to-be-updated account, according to the k^{th} transaction world state as a to-be-updated account state, where the to-be-updated account state comprises a to-be-updated state-data map and a to-be-updated set of dirty state-data keys; updating the to-be-updated state-data map to comprise mapping between the key and the value of the to-be-updated state data, and inserting the key of the to-be-updated state data into the to-be-updated set of dirty state-data keys, to obtain a current account state; and updating the account-state map in the k^{th} transaction world state to comprise mapping between the address of the to-be-updated account and the current account state, and inserting the address of the to-be-updated account into the set of dirty account addresses in the k^{th} transaction world state, to obtain the updated k^{th} transaction world state.

In all embodiments of the present disclosure, acquiring the account state, which is mapped to the address of the to-be-updated account, according to the k^{th} transaction world state as the to-be-updated account state may comprise: searching the account-state maps, sequentially from the k^{th} transaction world state to the newest on-chain world state along the chain of world states, for the address of the to-be-updated account; in response to the address of the to-be-updated account being found, determining an account state mapped to the earliest found address of the to-be-updated account as the to-be-updated account state; and in response to the address of the to-be-updated account being not found, acquiring a state-tree root of the address of the to-be-updated account in a world-state tree of the newest on-chain world state, and establishing the to-be-updated account state according to the address of the to-be-updated account and the state-tree root. In all embodiments of the present disclosure, the block-production node may acquire the to-be-updated account state according to the k^{th} transaction world state in a following manner. The account-state map of the k^{th} transaction world state is first searched to determine that whether there is an account state mapped to the address of the to-be-updated account. In case of positive determination, the account state is determined to serve as to-be-updated account state, and the search terminates. In case of negative determination, the previous world state of the k^{th} transaction world state is fetched according to the previous-world-state pointer of the k^{th} transaction world state, that is, the (k-1)^{th} merged world state is fetched, and then the block-production node continues to search the account-state map of the (k-1)^{th} merged world state to determine whether there is an account state mapped to the address of the to-be-updated account. In case of positive determination, the account state is determined to serve as to-be-updated account state, and the search terminates. In case of negative determination, the block-production node continues to fetch a further previous world state and repeat similar processing, until it searches the account-state map of the newest on-chain world state. In a case that there is still no account state mapped to the address of the to-be-updated account in the account-state map of the newest on-chain world state, since there is no previous world state for the newest on-chain world state, the block-production node searches the world-state tree of the newest on-chain world state for an account-state root corresponding to the address of the to-be-updated account, then creates a new account state in the internal memory, initializes the account address of the created new account state to be identical to the address of the to-be-updated account, and initializes the account-state root of the created new account state to be identical to the found account-state root. After the initialization, the created new account state is determined to serve as the to-be-updated account state.

In all embodiments of the present disclosure, executing statements in the k^{th} transaction to determine data to be updated in the k^{th} transaction and performing a query in searching the k^{th} transaction world state during the executing may be implemented in a following process. The statements in the k^{th} transaction are executed, and to-be-queried data, i.e., the address of the to-be-queried account and the key of the to-be-queried state data, for the k^{th} transaction is determined during the execution. Then, the account-state map of the k^{th} transaction world state is searched by using the address of the to-be-queried account. In a case that the account state mapped to such address is found, it is continued to search such account state by using the key of the to-be-queried state data. In a case that a value of the state data mapped a key is found, the value of the state data is determined to serve as a result of the query without further search. In a case that the value mapped the key is not found or the account state mapped to the address is not found in the account-state map of the k^{th} transaction world state, it is determined whether the k^{th} transaction world state have the previous world state exists based on its previous-world-state pointer. In case of positive determination, the previous world state of the k^{th} transaction world state, i.e., the (k-1)^{th} merged world state, is acquired according to the previous-world-state pointer, and then the foregoing searching operation is performed on the (k-1)^{th} merged world state by using the address of the to-be-queried account and the key of the to-be-queried state data. In a case that the value mapped to the key is found in the (k-1)^{th} merged world state, the searching terminates. Otherwise, it continues to determine whether the (k-1)^{th} merged world state has the previous world state according to its previous-world-state pointer. The following processes can be obtained by analogy, until reaching the newest on-chain world state. In a case that the value mapped to the key is still not found in the account-state map of the newest on-chain world state, the world-state tree of the newest on-chain world state is searched for the account-state root of the to-be-updated address, and then a new account state is created in the internal memory. The account address of the created new account state is initialized to be identical to the address of the to-be-updated account, and the account-state root of the created new account state is initialized to be identical to the found account-state root. After the initialization, the created new account state is determined to serve as the to-be-queried account state. In a case that the account-state root of the to-be-queried account state is empty (i.e., does not exist), the value of the to-be-queried state data is determined to be empty, and the searching terminates. In a case that the account-state root of the to-be-queried account state is not empty (i.e., exists) and the account-state tree of the to-be-queried account state is empty, the tree-node cache of the newest on-chain world state is determined to serve as the tree-node query source, and the account-state root of the to-be-queried account state is determined to serve as the state-tree root, to construct a new account-state tree in the internal memory. The new account-state tree is added into the to-be-queried account state, and then a state-data value is fetched from the account-state tree of the to-be-queried account state by using the key of the to-be-queried state data. Afterwards, the searching terminates.

S204: Merge data of the updated k^{th} transaction world state into the (k-1)^{th} merged world state to obtain a k^{th} merged world state, in a case that the k^{th} transaction is successfully executed.

In all embodiments of the present disclosure, step S204 may comprise: traversing one or more account addresses in the set of dirty account addresses in the updated k^{th} transaction world state sequentially to acquire each account address in the set of dirty account addresses; and for each j being a positive integer less than or equal to a total quantity I of the account addresses in the set of dirty account addresses, acquiring a current account state mapped to the j^{th} account address in the account-state map of the updated k^{th} transaction world state; acquiring a previous account state, which is mapped to the j^{th} account address, according to the (k-1)^{th} merged world state; updating the previous account state mapped to the j^{th} account address to be the current account state mapped to the j^{th} account address, and inserting the j^{th} account address into the set of dirty account addresses of the (k-1)^{th} merged world state, to obtain a j^{th} transition merged world state; and when j is equal to I, emptying the set of dirty account addresses and the account-state map that are of the updated k^{th} transaction world state, and determining the j^{th} transition merged world state to serve as the k^{th} merged world state. In all embodiments of the present disclosure, acquiring the previous account state, which is mapped to the j^{th} account address, according to the (k-1)^{th} merged world state may comprise: searching the account-state map in the (k-1)^{th} merged world state for an account state mapped to the j^{th} account address; in response to the account state mapped to the j^{th} account address being found in the account-state map in the (k-1)^{th} merged world state, determining the account state mapped to the j^{th} account address as a reference account state, then creating a new account state in the internal memory, initializing the account address and the account-state root of the created new account state to be identical to the account address and the account-state root of the reference account state, respectively, and determining the initialized created new account state to serve as the previous account state of the j^{th} account address; and in response to the account state mapped to the j^{th} account address being not found in the account-state map in the (k-1)^{th} merged world state, performing the above searching in a previous worlds state of the (k-1)^{th} merged world state. The above process continues along the chain of world states. In a case that the account state mapped to the j^{th} account address is not found even in the account-state map of the (k-1)^{th} merged world state, the world-state tree of the newest on-chain world state is searched for an account-state root of the j^{th} account address. Then, a new account state is created in the internal memory, and the account address and the account-state root of the created new account state is initialized to be identical to the j^{th} account address and the account-state root obtained from the world-state tree, respectively. The created new account state is determined to serve as the previous account state of the j^{th} account address.

**In** one possible embodiment, the current account state mapped to the j^{th} account address may comprise a first state-data map, and the previous account state mapped to the j^{th} account address may comprise a second state-data map. Updating the previous account state mapped to the j^{th} account address to be the current account state mapped to the j^{th} account address may comprise: updating the second state-data map to comprise correspondence between one or more keys and one or more values of state data in the first state-data map, and inserting the one or more keys in the first state-data map into a set of dirty state-data keys, which is of the previous account state mapped to the j^{th} account address, to obtain the j^{th} transition merged world state.

S205: Determine the k^{th} merged world state to serve as the first updated state when k is equal to H.

Generally, the first updated state comprises the account address(es) of the account(s), which need to be updated when statements in all transactions of the initial block have been executed and the account state, and the post-update account states of the account(s). The set of dirty account addresses of the first updated state comprises all the account address(es) of the account(s).

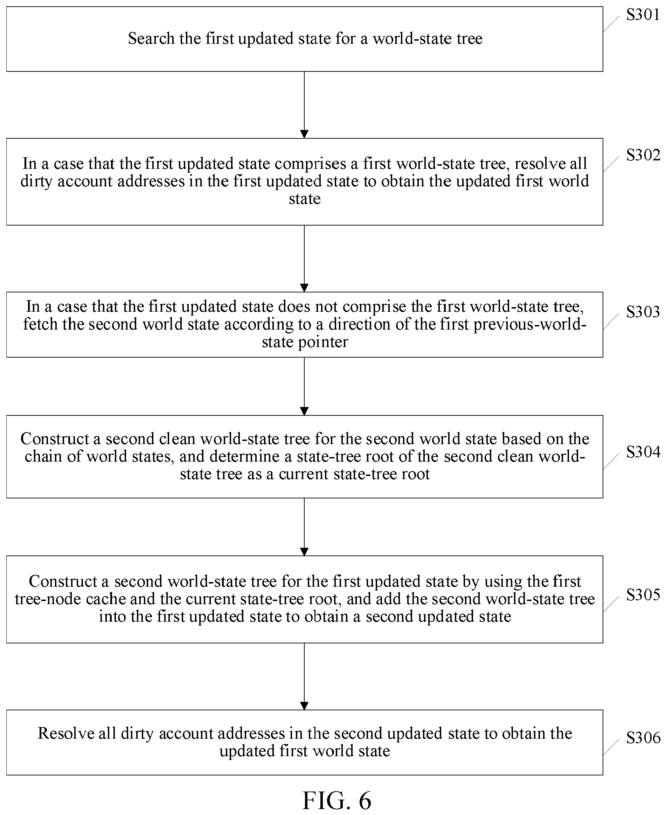

Reference is made to FIG. 6, which is a schematic flowchart of a process for constructing a clean world-state tree according to an embodiment of the present disclosure. The process is an implementation of step S102 as shown in FIG. 3, i.e., constructing the first clean world-state tree for the first updated state based on the chain of world states to obtain the updated first world state comprising the first clean world-state tree. The process is executable by a block-production node (e.g., an arbitrary blockchain node in the blockchain node system 10 as shown in FIG. 1). Hereinafter it is taken as an example that the process is executed by the block-production node. The process of constructing the clean world-state tree may at least include following steps S301 to S306.

S301: Search the first updated state for a world-state tree.

A respective clean world-state tree may be constructed for all world states managed by the block-production node. A means for constructing the clean world-state tree is applicable to all world states. Considering a certain world state may comprise a world-state tree already, it is necessary to determine whether a world state comprises a world-state tree before constructing a clean world-state tree for such world state. When constructing a clean world-state tree for the first updated state, the block-production node searches the first updated state for a world-state tree first.

S302: in a case that the first updated state comprises a first world-state tree, resolve all dirty account addresses in the first updated state to obtain the updated first world state.

When the first updated state comprises the first world-state tree already, the block-production node resolves all dirty account addresses in the first updated state directly, so as to obtain the updated first world state comprising the first clean world-state tree. A process of the resolving may refer to step S306 as follows and be derived by analogy, and hence is not described in detail here.

S303: in a case that the first updated state does not comprise the first world-state tree, fetch the second world state according to a direction of the first previous-world-state pointer.

When the first updated state does not comprise the first world-state tree, the block-production node may search the world states in the chain sequentially along a forward direction of the chain, so as to construct a second world-state tree for the first updated state by using the clean world state of a downstream world state in the chain of world states. First, the block-production node acquires the previous world state of the first updated state, i.e., acquires the second world state, to which the first previous-world-state pointer is directed. Then, the block-production node acquires the first clean world-state tree of the second world state as a second clean world-state tree.

S304: Construct a second clean world-state tree for the second world state based on the chain of world states, and determine a state-tree root of the second clean world-state tree as a current state-tree root.

The block-production node may construct a clean world-state tree for the second world state first, i.e., performing a process similar to that defined by steps S301 to S306 on the second world state, so to obtain a first clean world-state tree for the second world state. That is, the first clean world-state tree for the second world state may serve as the second clean world-state tree for the first updated state. In such case, the block-production node determines a root of the second clean world-state tree as the current state-tree root.

S305: Construct a second world-state tree for the first updated state by using the first tree-node cache and the current state-tree root, and add the second world-state tree into the first updated state to obtain a second updated state.

The block-production node determines the first tree-node cache as a tree-node query source, and then constructs the second world-state tree for the first updated state from the current state-tree root. At such time, each account address, which is mapped to the post-update account state, in the set of dirty account addresses of the first updated state has not been resolved yet. Hence, it needs to be resolved first before obtaining a clean version of the second world-state tree, i.e., obtaining the first clean world-state tree.

S306: Resolve all dirty account addresses in the second updated state to obtain the updated first world state.

Regardless of what is obtained for the first updated state being the first world-state tree or the second world-state tree, the block-production node needs to resolve all dirty account addresses. Taking the second updated state comprising the second world-state tree as an example, the resolving process comprises: traversing the chain of world states downstream the second updated state sequentially to acquire a set of dirty account addresses comprised in each downstream world state; and for each x being a positive integer less than or equal to a sequential number Z of the second updated state in the chain of world states, the processing is as follows. Account addresses in an x^{th} set of dirty account addresses, which is comprised in an x^{th} world state in the chain of world states, are traverses sequentially to acquire each account address in the x^{th} set of dirty account addresses. For each m being a positive integer less than or equal to a quantity of all account addresses in the x^{th} set of dirty account addresses, following processing is performed: acquiring a current account state and a previous account state, both of which are mapped to the m^{th} account address; and merging the current account state mapped to the m^{th} account address and the previous account state mapped the m^{th} account address, where an x^{th} merged world state is obtained after the current account state and the previous account state mapped to each account address in the x^{th} set of dirty account addresses are merged. Each dirty account address in the x^{th} set of dirty account addresses is added into an (x-1)^{th} on-chain set of dirty account addresses to obtain an x^{th} on-chain set of dirty account addresses, where the (x-1)^{th} on-chain set of dirty account addresses is an empty set when x is equal to 1. When x is equal to Z, the x^{th} on-chain set of dirty account addresses is determined as a whole set of dirty account addresses, and the x^{th} merged world state as is determines as a third updated state.

In all embodiments of the present disclosure, merging the current account state mapped to the m^{th} account address and the previous account state mapped the m^{th} account address may comprise: searching the current account state mapped to the m^{th} account address for an account-state tree; in a case that the account-state tree is not found in the current account state mapped to the m^{th} account address or the account-state root of the current account state mapped to the m^{th} account address is not equal to the account-state root of the previous account state mapped to the m^{th} account address, establishing a target account-state tree by using the tree-node cache for the current account state mapped to the m^{th} account address and the account-state root of the previous account state mapped to the m^{th} account address, adding the target account-state tree into the current account state mapped to the m^{th} account address, and updating the account-state root of the current account state mapped to the m^{th} account address to be the account-state root of the previous account state mapped to the m^{th} account address, to obtain a target account state; in a case the account-state tree is found in the current account state mapped to the m^{th} account address and the account-state root of the current account state mapped to the m^{th} account address is equal to the account-state root of the previous account state mapped to the m^{th} account address, determining the current account state mapped to the m^{th} account address as the target account state; and in a case that a first set of dirty state-data keys in the target account state is not an empty set, acquiring one or more values, which are mapped to one or more dirty state-data keys in the first set of dirty state-data keys, via a state-data map of the target account state, updating an account-state tree in the target account state to comprise the one or more dirty state-data keys and the one or more values, updating the account-state root of the target account state to be a root of the updated account-state tree, emptying the first set of dirty state-data keys of the target account state comprising the updated account-state tree, and storing mapping between tree-node hashes and tree nodes in the updated account-state tree into the x^{th} merged world state.

In all embodiments of the present disclosure, the above process may be implemented as follows. The block-production node may determine the second updated state to serve as a current world state, and then perform "merging all downstream dirty account addresses into the current world state". The merging process may comprise following steps. It is determined whether there is a previous world state of the current world state exists according to the previous-world-state pointer of the current world state. In a case that there is the previous world state, the previous world state is determined to serve as the current world state instead, and then the above "merging all downstream dirty account addresses into the current world state" restarts. The whole set of dirty account addresses obtained for the previous world state serves an initial whole set of dirty account addresses for the current world state. In the above process, in a case that there is no previous world state, an empty set is created in the internal memory to serve as the initial whole set of dirty account addresses. After obtaining the initial whole set of dirty account addresses, the block-production node may traverse the set of dirty account addresses of the current world state and perform following operations for each account address. The account-state map of the current world state is searched for an account state mapped to such account address, and the account state is determined to serve as a current account state. It is determined whether there is the previous world state of the current world state according to the previous-world-state pointer of the current world state. In a case that there is the previous world state, the previous world is searched for an account state mapped to such account address, and the account stress is called a previous account state in. In a case that there is no previous world state, the current account state is determined to serve as the previous account state, the account-state root of the previous account state. Then, a root of the previous account state is determined to be that of the current account state, the tree-node cache of the current world state serves as a basis (e.g., the query source), and accordingly an account-state tree of a target account state, which is the current world state, is established. Afterwards, such account address is inserted into the initial whole set of dirty account addresses. After all account addresses in the set of dirty account addresses have been subject to the above operations, the whole set of dirty account addresses and the third updated state are obtained.

In all embodiments of the present disclosure, determining the root of the previous account state to be that of the current account state, determining the tree-node cache of the current world state to serve as a basis, and accordingly establishing the account-state tree of the target account state may comprise following steps. In a case that the account-state tree of the target account state is not empty and the account-state root of the target account state is identical to the root of the previous account state, the process proceeds to a next step. Otherwise, a new account-state tree is constructed in the internal memory through using the tree-node cache as the tree-node query source and using the root of the previous account-state root as the state-tree root, the new account tree is then added into the target account state, an account-state root of the target account state is updated to be the previous account-state root, and then the process proceeds to the next step. The next step is as follows. The process terminates in a case that a first set of dirty state-data keys of the target account state is empty. In a case that the first set of dirty state-data keys of the target account state is not empty, the first set of dirty state-data keys of the target account state is traversed to acquire each dirty state-data key. For each dirty state-data key, the state-data map of the target account state is searched to fetch the state-data value mapped to such state-data key, and the account-state tree of the target account state is updated to comprise the pair of the state-data key and the state-data value. Afterwards, the account-state tree of the target account state is submitted into (i.e., written to update) a tree-node update cache which is the tree-node cache of the target account state. Afterwards, the account-state root of the target account state is updated to be a root of the updated account-state tree. Afterwards, the first set of dirty state-data keys of the target account state comprising the updated account-state tree is emptied.

According to the method provided herein, the chain of world states is established to support simultaneous maintenance on the world states of blocks having different heights, or the world states of blocks in different branches. The method is compatible with a consensus mechanism that requires simultaneous verification on multiple blocks, and consistency among state data in the blockchain system can be ensured.

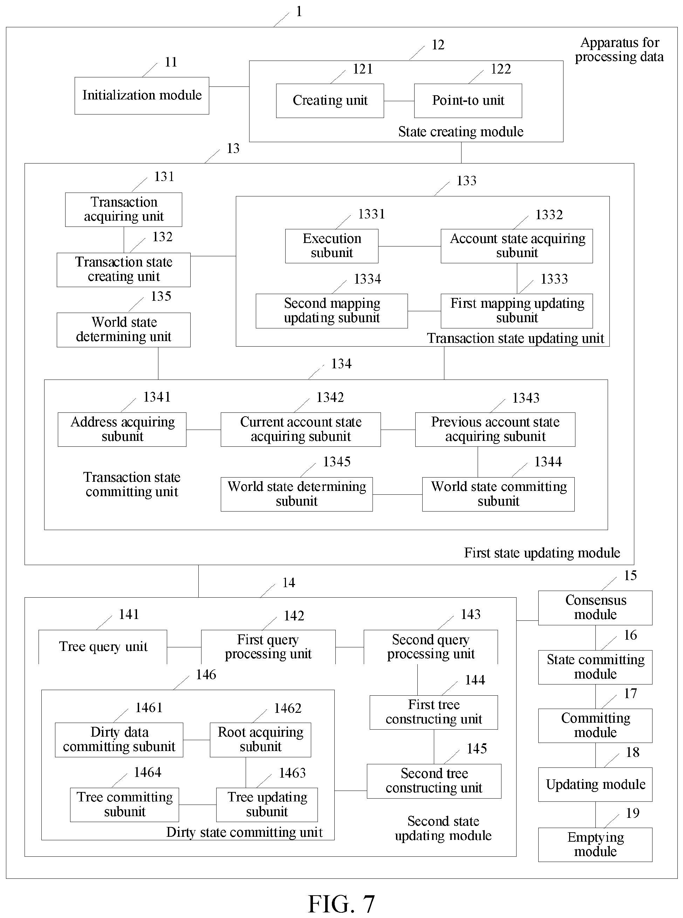

Reference is made to FIG. 7, which is a schematic structural diagram of an apparatus for processing data based on a blockchain according to an embodiment of the present disclosure. The apparatus may be a computer program (including program codes) running in a computer device, for example, the apparatus is application software. The apparatus may be used for executing the corresponding steps in the method provided in the foregoing embodiments of the present disclosure. As shown in FIG. 7, the apparatus 1 for processing data may include an initialization module 11, a state creating module 12, a first state updating module 13, a second state updating module 14, a consensus module 15, and a state substituting module 16.

The initialization module 11 is configured to generate an initial block.

The state creating module 12 is configured to create a first world state for the initial block, where: the first world state and a second world state of a parent block of the initial block belong to a chain of world states, and the first world state points to the second world state in the chain of world states; the second world state is a consensus root world state that points to a newest on-chain world state in the chain of world states, in a case that the parent block is a block having a largest height among all blocks in the blockchain; and the newest on-chain world state is a most downstream world state in the chain of world states and records a most recent world state among all blocks in the blockchain.

The first state updating module 13 is configured to update the first world state based on transactions in the initial block to obtain a first updated state.

The second state updating module 14 is configured to construct a first clean world-state tree for the first updated state based on the chain of world states to obtain an updated first world state comprising the first clean world-state tree.

The consensus module 15 is configured to write a first root of the first clean world-state tree into the initial block to obtain a block to be added into the blockchain, and transmit the to-be-added block to consensus nodes to enable the consensus node to perform verification on the to-be-added block based on the first root through a consensus mechanism.

The state substituting module 16 is configured to, in a case that a result of the verification indicates that the to-be-added block passes the verification: write the to-be-added block into the blockchain; and substitute data in the updated first world state for data in world states in the chain of world states sequentially along a forward direction of the chain of world state, until the newest on-chain world state is updated to be identical to the updated first world state, where after the substituting, the updated first world state serves as the consensus root world state and points to the newest on-chain world state in the chain of world states.

A specific manner of implementing the initialization module 11, the state creating module 12, the first state updating module 13, the second state updating module 14, the consensus module 15, and the state substituting module 16 may refer to the foregoing description of the step Steps S101 to S104 corresponding to FIG. 3, and will not be repeated herein.

In all embodiments of the present disclosure, the state creating module 12 may include a creating unit 121 and a directing unit 122.

The creating unit 121 is configured to create an initial world state for the initial block, where the initial world state comprises a first previous-world-state pointer and a first tree-node cache, the first tree-node cache comprises a first previous-tree-node-cache pointer.

The directing unit 122 is configured to direct the first previous-world-state pointer toward the second world state of the parent block and direct the first previous-tree-node-cache pointer toward a second tree-node cache comprised in the second world state, to obtain the first world state.

A specific manner of implementing the creating unit 121 and the directing unit 122 may refer to the foregoing description of the step S101 corresponding to FIG. 3 and will not be repeated herein.

The first state updating module 13 includes: a first transaction acquiring unit 131, a transaction state creating unit 132, a transaction state updating unit 133, a transaction state merging unit 134 and a world state determining unit 135.

In all embodiments of the present disclosure, the first transaction acquiring unit 131 may be configured to traverse all transactions in the initial block sequentially to acquire each transaction in the initial block. Other units function sequentially for each k being a positive integer less than or equal a quantity H of all transactions in the initial block.

The transaction state creating unit 132 is configured to create a k^{th} transaction world state for a k^{th} transaction in the initial block, where the k^{th} transaction world state points to a (k-1)^{th} merged world state in the chain of world states, and the first world state serves as the (k-1)^{th} merged world state when k is equal to 1.

The transaction state updating unit 133 is configured to execute statements in the k^{th} transaction to update the k^{th} transaction world state into an updated k^{th} transaction world state.

The transaction state merging unit 134 is configured to merge data of the updated k^{th} transaction world state into the (k-1)^{th} merged world state to obtain a k^{th} merged world state, in a case that the k^{th} transaction is successfully executed.

The world state determining unit 135 is configured to determine the k^{th} merged world state serves as the first updated state when k is equal to H.

A specific manner of implementing the first transaction acquiring unit 131, the transaction state creating unit 132, the transaction state updating unit 133, the transaction state merging unit 134, and the world state determining unit 135 may refer to the foregoing description of the step S201-S205 corresponding to FIG. 5 and will not be repeated herein.

In all embodiments of the present disclosure, the k^{th} transaction world state may comprise an account-state map and a set of dirty account addresses.

The transaction state updating unit 133 includes: an execution subunit 1331, an account state acquiring subunit 1332, a first mapping updating subunit 1333 and a second mapping updating unit 1334.

The execution subunit 1331 is configured to execute statements in the k^{th} transaction to determine data to be updated in the k^{th} transaction, where the to-be-updated data comprises an address of a to-be-updated account, a key of to-be-updated state data, and a value of the to-be-updated state data.

The account state acquiring subunit 1332 is configured to acquire an account state, which is mapped to the address of the to-be-updated account, according to the k^{th} transaction world state as a to-be-updated account state, where the to-be-updated account state comprises a to-be-updated state-data map and a to-be-updated set of dirty state-data keys.

The first mapping updating subunit 1333 is configured to update the to-be-updated state-data map to comprise mapping between the key and the value of the to-be-updated state data, and insert the key of the to-be-updated state data into the to-be-updated set of dirty state-data keys, to obtain a current account state.

The second mapping updating unit 1334 is configured to update the account-state map in the k^{th} transaction world state to comprise mapping between the address of the to-be-updated account and the current account state, and insert the address of the to-be-updated account into the set of dirty account addresses in the k^{th} transaction world state, to obtain the updated k^{th} transaction world state.

In all embodiments of the present disclosure, the account state acquiring subunit 1332 may be configured to: search the account-state maps, sequentially from the k^{th} transaction world state to the newest on-chain world state along the chain of world states, for the address of the to-be-updated account; in response to the address of the to-be-updated account being found, determine an account state mapped to the earliest found address of the to-be-updated account as the to-be-updated account state; and in response to the address of the to-be-updated account being not found, acquire a state-tree root of the address of the to-be-updated account in a world-state tree of the newest on-chain world state, and establish the to-be-updated account state according to the address of the to-be-updated account and the state-tree root.

A specific manner of implementing the execution subunit 1331, the account state acquiring subunit 1332, the first mapping updating subunit 1333, and the second mapping updating unit 1334 may refer to the foregoing description of the step S203 corresponding to FIG. 5 and will not be repeated herein.

The transaction state merging unit 134 includes: an address acquiring subunit 1341, a current account state acquiring subunit 1342, a previous account state acquiring subunit 1343, a world state merging subunit 1344, and a world state determining subunit 1345.

The address acquiring subunit 1341 is configured to traverse one or more account addresses in the set of dirty account addresses in the updated k^{th} transaction world state sequentially to acquire each account address in the set of dirty account addresses. Other subunits functions sequentially for each j being a positive integer less than or equal to a total quantity I of the account addresses in the set of dirty account addresses.

The current account state acquiring subunit 1342 is configured to acquire a current account state mapped to the j^{th} account address in the account-state map of the updated k^{th} transaction world state.

The previous account state acquiring subunit 1343 is configured to acquire a previous account state, which is mapped to the j^{th} account address, according to the (k-1)^{th} merged world state.

The world state merging subunit 1344 is configured to update the previous account state mapped to the j^{th} account address to be the current account state mapped to the j^{th} account address, and insert the j^{th} account address into the set of dirty account addresses of the (k-1)^{th} merged world state, to obtain a j^{th} transition merged world state.

The world state determining subunit 1345 is configured to, when j is equal to I, empty the set of dirty account addresses and the account-state map that are of the updated k^{th} transaction world state, and determine the j^{th} transition merged world state to serve as the k^{th} merged world state.

In all embodiments of the present disclosure, the current account state mapped to the j^{th} account address may comprise a first state-data map, and the previous account state mapped to the j^{th} account address comprises a second state-data map. The world state merging subunit 1345 is configured to updating the second state-data map to comprise correspondence between one or more keys and one or more values of state data in the first state-data map, and insert the one or more keys in the first state-data map into a set of dirty state-data keys, which is of the previous account state mapped to the j^{th} account address, to obtain the j^{th} transition merged world state.

A specific manner of implementing the address acquiring subunit 1341, the current account state acquiring subunit 1342, the previous account state acquiring subunit 1343, the world state merging subunit 1344, and the world state determining subunit 1345 may refer to the foregoing description of the step S204 corresponding to FIG. 5, and will not be repeated herein.

In all embodiments of the present disclosure, the second state updating module 14 may include: a tree query unit 141, a first query processing unit 142, a second query processing unit 143, a first tree constructing unit 144, and a second tree constructing unit 145.

The tree query unit 141 is configured to search the first updated state for a world-state tree.

The first query processing unit 142 is configured to resolve, in a case that the first updated state comprises a first world-state tree, all dirty account addresses in the first updated state to obtain the updated first world state.

The second query processing unit 143 is configured to fetch the second world state according to a direction of the first previous-world-state pointer, in a case that the first updated state does not comprise the first world-state tree.

The first tree constructing unit 144 is configured to construct a second clean world-state tree for the second world state based on the chain of world states, where the second clean world-state tree is constructed in a same manner as constructing the first clean world-state tree for the first updated state.

The second tree constructing unit 145 is configured to determine a state-tree root of the second clean world-state tree as a current state-tree root.

The second tree constructing unit 145 is further configured to construct a second world-state tree for the first updated state by using the first tree-node cache and the current state-tree root, and add the second world-state tree into the first updated state to obtain a second updated state.

The dirty state substituting unit 146 is configured to resolve all dirty account addresses in the second updated state to obtain the updated first world state.

A specific manner of implementing the tree query unit 141, the first query processing unit 142, the second query processing unit 143, the first tree constructing unit 144, and the second tree constructing unit 145 may refer to the foregoing description of the steps S301 to S306 corresponding to FIG. 6, and will not be repeated herein.

In all embodiments of the present disclosure, the dirty state substituting unit 146 may include: a dirty data submitting subunit 1461, a root acquiring subunit 1462, a tree updating subunit 1463, and a tree submitting subunit 1464.

The dirty data submitting subunit 1461 is configured to merge all downstream dirty account addresses into the second updated state to obtain a third updated state and a whole set of dirty account addresses.

The root acquiring subunit 1462 is configured to acquire an account-state root of an account state which is mapped in the third updated state to each account address of the whole set of dirty account addresses.

The tree updating subunit 1463 is configured to update the second world-state tree to comprise each account address in the whole set of dirty account addresses and the account-state root mapped to said account address to obtain the first clean world-state tree.

The tree submitting subunit 1464 is configured to store mapping between tree-node hashes and tree nodes, which is in the first clean world-state tree, into a tree-node map in a tree-node cache in the third updated state to obtain the updated first world state.

In all embodiments of the present disclosure, the dirty data submitting subunit 1461 may be configured to: traverse the chain of world states downstream the second updated state sequentially to acquire a set of dirty account addresses comprised in each downstream world state; and for each x being a positive integer less than or equal to a sequential number Z of the second updated state in the chain of world states: traverse account addresses in an x^{th} set of dirty account addresses, which is comprised in an x^{th} world state in the chain of world states, sequentially to acquire each account address in the x^{th} set of dirty account addresses; for each m being a positive integer less than or equal to a quantity of all account addresses in the x^{th} set of dirty account addresses, acquire a current account state and a previous account state, both of which are mapped to the m^{th} account address; merge the current account state mapped to the m^{th} account address and the previous account state mapped the m^{th} account address, where an x^{th} merged world state is obtained after the current account state and the previous account state mapped to each account address in the x^{th} set of dirty account addresses are merged; add each dirty account address in the x^{th} set of dirty account addresses into an (x-1)^{th} on-chain set of dirty account addresses to obtain an x^{th} on-chain set of dirty account addresses, where the (x-1)^{th} on-chain set of dirty account addresses is an empty set when x is equal to 1; and when x is equal to Z, determine the x^{th} on-chain set of dirty account addresses as the whole set of dirty account addresses, and determine the x^{th} merged world state as the third updated state.

In all embodiments of the present disclosure, the dirty data submitting subunit 1461 may be further configured to: searching the current account state mapped to the m^{th} account address for an account-state tree; in a case that the account-state tree is not found in the current account state mapped to the m^{th} account address or the account-state root of the current account state mapped to the m^{th} account address is not equal to the account-state root of the previous account state mapped to the m^{th} account address, establish a target account-state tree by using the tree-node cache for the current account state mapped to the m^{th} account address and the account-state root of the previous account state mapped to the m^{th} account address, add the target account-state tree into the current account state mapped to the m^{th} account address, and update the account-state root of the current account state mapped to the m^{th} account address to be the account-state root of the previous account state mapped to the m^{th} account address, to obtain a target account state; in a case the account-state tree is found in the current account state mapped to the m^{th} account address and the account-state root of the current account state mapped to the m^{th} account address is equal to the account-state root of the previous account state mapped to the m^{th} account address, determine the current account state mapped to the m^{th} account address as the target account state; and in a case that a first set of dirty state-data keys in the target account state is not an empty set, acquire one or more values, which are mapped to one or more dirty state-data keys in the first set of dirty state-data keys, via a state-data map of the target account state, update an account-state tree in the target account state to comprise the one or more dirty state-data keys and the one or more values, update the account-state root of the target account state to be a root of the updated account-state tree, empty the first set of dirty state-data keys of the target account state comprising the updated account-state tree, and store mapping between tree-node hashes and tree nodes in the updated account-state tree into the x^{th} merged world state.

A specific manner of implementing the dirty data submitting subunit 1461, the root acquiring subunit 1462, the tree updating subunit 1463, and the tree submitting subunit 1464 may refer to the foregoing description of the step S306 corresponding to FIG. 3 and will not be repeated herein.

In all embodiments of the present disclosure, the apparatus 1 for processing data may include: a submitting module 17, an updating module 18, and an emptying module 19,
The submitting module 17 is configured to resolve, after the substituting data in the updated first world state for data in world states in the chain of world states sequentially along a forward direction of the chain of world state, all dirty account addresses in the newest on-chain world state to obtain a clean newest on-chain world state, where a tree-node cache in the clean newest on-chain world state comprises a first tree-node map.

The updating module 18 is configured to update a tree-node database to comprise tree-node hashes and tree nodes in the first tree-node map.

The emptying module 19 is configured to empty a set of dirty account addresses, an account-state map, and the first tree-node map, which are in the clean newest on-chain world state.

A specific manner of implementing the submitting module 17, the updating module 18, and the emptying module 19 may refer to the description corresponding to FIG. 3 and will not be repeated herein.

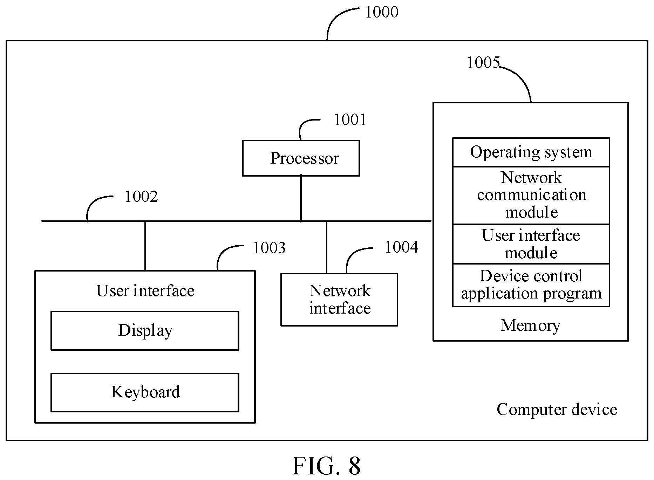

Reference is made to FIG. 8, which is a schematic structural diagram of a computer device according to an embodiment of the present disclosure. As shown in FIG. 8, the apparatus 1 for processing data corresponding to FIG. 7 above may be applied to a computer device 1000, and the computer device 1000 may include: a processor 1001, a network interface 1004 and a memory 1005, in addition, the above computer device 1000 may further include: a user interface 1003 and at least one communication bus 1002. The communications bus 1002 is configured to implement connection and communication between these components. The user interface 1003 may include a display and a keyboard. Optionally, the user interface 1003 may further include a standard wired interface and wireless interface. The network interface 1004 may optionally include a standard wired interface and wireless interface (for example, a Wi-Fi interface). The memory 1005 may be a high-speed RAM, or may be a non-volatile memory, for example, at least one magnetic disk memory. Optionally, the memory 1005 may be at least one storage apparatus that is located far away from the foregoing processor 1001. As shown in FIG. 8, the memory 1005 used as a computer-readable storage medium may include an operating system, a network communications module, a user interface module, and a device-control application program.

In the computer device 1000 as shown in FIG. 8, the network interface 1004 may provide network communication network elements; the user interface 1003 is primarily configured to provide an interface for user input; the processor 1001 may be configured to invoke a device control application program stored in the memory 1005 to implement following steps.

An initial block is generated and a first world state is created for the initial block, where: the first world state and a second world state of a parent block of the initial block belong to a chain of world states, and the first world state points to the second world state in the chain of world states; the second world state is a consensus root world state that points to a newest on-chain world state in the chain of world states, in a case that the parent block is a block having a largest height among all blocks in the blockchain; and the newest on-chain world state is a most downstream world state in the chain of world states and records a most recent world state among all blocks in the blockchain.

The first world state is updated based on transactions in the initial block to obtain a first updated state, and a first clean world-state tree for the first updated state is constructed based on the chain of world states to obtain an updated first world state comprising the first clean world-state tree.

A first root of the first clean world-state tree is written into the initial block to obtain a block to be added into the blockchain, and the to-be-added block is transmitted to consensus nodes to enable the consensus node to perform verification on the to-be-added block based on the first root through a consensus mechanism.

In a case that a result of the verification indicates that the to-be-added block passes the verification, the to-be-added block is written into the blockchain, and the updated first world state is substituted for world states in the chain of world states sequentially along a forward direction of the chain of world states until the newest on-chain world state is updated to be identical to the updated first world state, where after the substitution, the updated first world state serves as the consensus root world state and points to the newest on-chain world state in the chain of world states.

It will be appreciated that the computer device 1000 may execute the method for processing data in any foregoing embodiment, e.g., as shown FIG. 3, which is not repeated herein. In addition, beneficial effects of the corresponding method are not repeated herein.

In addition, an embodiment of the present disclosure further provides a computer-readable storage medium, and a computer program executable on the apparatus 1 is stored in the computer-readable storage medium. The computer program includes program instructions, the processor, when executing the program instruction, execute the method for processing data in any foregoing embodiment, e.g., as shown FIG. 3, which is not repeated herein. In addition, beneficial effects of the corresponding method are not repeated herein. For technical details that are not disclosed in the computer-readable storage medium embodiments of the present disclosure, please refer to the descriptions of the method embodiments of the present disclosure.

The computer-readable storage medium may be the apparatus for processing data according to any foregoing embodiment or an internal storage unit of the computer device, such as the hard disk or internal memory of the computer device. The computer-readable storage medium may also be an external storage device of the computer device, for example, a plug-in type of hard disk being equipped on the computer device, a smart media card (SMC), a secure digital (SD) card, a flash card, etc. Further, the computer-readable storage medium can also include both the internal storage unit of the computer device and an external storage device. The computer-readable storage medium is configured to store other programs and data needed for the computer program and the computer device. The computer-readable storage medium may be also configured to temporarily store the data that has been outputted or will be outputted.

In addition, an embodiment of the present disclosure further provides a computer program product or computer program, the computer program product or the computer program including computer instructions, the computer instruction being stored in a computer-readable storage medium. The processor of the computer device reads the computer instruction from the computer-readable storage medium, and the processor executes the computer instruction such that the computer device executes the method according to any foregoing embodiment.

Terms such as "first", "second", etc. in this description, claims, and the accompanying drawings of the present disclosure are used to distinguish different objects and are not used to describe a specific sequence. In addition, the terms "include", and any variant thereof are intended to cover a non-exclusive inclusion. For example, a process, method, apparatus, product or device that includes a series of steps or units is not limited to the listed steps or modules; and instead, further optionally includes a step or module that is not listed, or further optionally includes another step or unit that is intrinsic to the process, method, apparatus, product, or device.

A person of ordinary skill in the art may understand that units and algorithm steps of the examples described in the embodiments disclosed herein may be implemented by electronic hardware, computer software, or a combination thereof. To clearly describe the interchangeability between the hardware and the software, the foregoing has generally described compositions and steps of each example based on network elements. Whether the network elements are executed in a mode of hardware or software depends on particular applications and design constraint conditions of the technical solutions. A person skilled in the art may use different methods to implement the described network elements for each particular application, but it is not considered that the implementation goes beyond the scope of the present disclosure.

What is disclosed above is merely exemplary embodiments of the present disclosure, and certainly is not intended to limit the scope of the claims of the present disclosure. Therefore, equivalent variations made in accordance with the claims of the present disclosure shall fall within the scope of the present disclosure.

## Claims

1. A method for processing data based on a blockchain, executable by a computer device, wherein the method comprises:
generating (S101) an initial block;
creating (S101) a first world state for the initial block, wherein:
the first world state and a second world state of a parent block of the initial block belong to a chain of world states, and the first world state points to the second world state in the chain of world states;
the second world state is a consensus root world state that points to a newest on-chain world state in the chain of world states, in a case that the parent block is a block having a largest height among all blocks in the blockchain; and
the newest on-chain world state is a most downstream world state in the chain of world states and records a most recent world state among all blocks in the blockchain;
updating (S102) the first world state based on transactions in the initial block to obtain a first updated state;
constructing (S102) a first clean world-state tree for the first updated state based on the chain of world states to obtain an updated first world state comprising the first clean world-state tree;
writing (S103) a first root of the first clean world-state tree into the initial block to obtain a block to be added into the blockchain;
transmitting (S103) the to-be-added block to consensus nodes to enable the consensus node to perform verification on the to-be-added block based on the first root through a consensus mechanism; and
in a case that a result of the verification indicates that the to-be-added block passes the verification,
writing (S104) the to-be-added block into the blockchain, and
substituting (S104) data in the updated first world state for data in world states in the chain of world states sequentially along a forward direction of the chain of world states until the newest on-chain world state is updated to be identical to the updated first world state, wherein after the substituting, the updated first world state serves as the consensus root world state and points to the newest on-chain world state in the chain of world states.

2. The method according to claim 1, wherein creating (S101) the first world state for the initial block comprises:
creating an initial world state for the initial block, wherein the initial world state comprises a first previous-world-state pointer and a first tree-node cache, the first tree-node cache comprises a first previous-tree-node-cache pointer;
directing the first previous-world-state pointer toward the second world state of the parent block, and directing the first previous-tree-node-cache pointer toward a second tree-node cache comprised in the second world state, to obtain the first world state.

3. The method according to claim 1, wherein updating (S102) the first world state based on the transactions in the initial block to obtain the first updated state comprises:
traversing (S201) all transactions in the initial block sequentially to acquire each transaction in the initial block; and
for each k being a positive integer less than or equal a quantity H of all transactions in the initial block:
creating (S202) a k^{th} transaction world state for a k^{th} transaction in the initial block, wherein the k^{th} transaction world state points to a (k-1)^{th} merged world state in the chain of world states, and the first world state serves as the (k-1)^{th} merged world state when k is equal to 1;
executing (S203) statements in the k^{th} transaction to update the k^{th} transaction world state into an updated k^{th} transaction world state; and
merging (S204) data of the updated k^{th} transaction world state into the (k-1)^{th} merged world state to obtain a k^{th} merged world state, in a case that the k^{th} transaction is successfully executed;
wherein the k^{th} merged world state serves as the first updated state when k is equal to H.

4. The method according to claim 3, wherein the k^{th} transaction world state comprises an account-state map and a set of dirty account addresses, and executing (S203) statements in the k^{th} transaction to update the k^{th} transaction world state into the updated k^{th} transaction world state comprises:
executing statements in the k^{th} transaction to determine data to be updated in the k^{th} transaction, wherein the to-be-updated data comprises an address of a to-be-updated account, a key of to-be-updated state data, and a value of the to-be-updated state data;
acquiring an account state, which is mapped to the address of the to-be-updated account, according to the k^{th} transaction world state as a to-be-updated account state, wherein the to-be-updated account state comprises a to-be-updated state-data map and a to-be-updated set of dirty state-data keys;
updating the to-be-updated state-data map to comprise mapping between the key and the value of the to-be-updated state data, and inserting the key of the to-be-updated state data into the to-be-updated set of dirty state-data keys, to obtain a current account state; and
updating the account-state map in the k^{th} transaction world state to comprise mapping between the address of the to-be-updated account and the current account state, and inserting the address of the to-be-updated account into the set of dirty account addresses in the k^{th} transaction world state, to obtain the updated k^{th} transaction world state.

5. The method according to claim 4, wherein acquiring the account state, which is mapped to the address of the to-be-updated account, according to the k^{th} transaction world state as the to-be-updated account state comprises:
searching the account-state maps, sequentially from the k^{th} transaction world state to the newest on-chain world state along the chain of world states, for the address of the to-be-updated account;
in response to the address of the to-be-updated account being found, determining an account state mapped to the earliest found address of the to-be-updated account as the to-be-updated account state; and
in response to the address of the to-be-updated account being not found, acquiring a state-tree root of the address of the to-be-updated account in a world-state tree of the newest on-chain world state, and establishing the to-be-updated account state according to the address of the to-be-updated account and the state-tree root.

6. The method according to claim 4, wherein merging the data of the updated k^{th} transaction world state into the (k-1)^{th} merged world state to obtain the k^{th} merged world state comprises:
traversing one or more account addresses in the set of dirty account addresses in the updated k^{th} transaction world state sequentially to acquire each account address in the set of dirty account addresses; and
for each j being a positive integer less than or equal to a total quantity I of the account addresses in the set of dirty account addresses,
acquiring a current account state mapped to the j^{th} account address in the account-state map of the updated k^{th} transaction world state;
acquiring a previous account state, which is mapped to the j^{th} account address, according to the (k-1)^{th} merged world state;
updating the previous account state mapped to the j^{th} account address to be the current account state mapped to the j^{th} account address, and inserting the j^{th} account address into the set of dirty account addresses of the (k-1)^{th} merged world state, to obtain a j^{th} transition merged world state; and
when j is equal to I, emptying the set of dirty account addresses and the account-state map that are of the updated k^{th} transaction world state, and determining the j^{th} transition merged world state to serve as the k^{th} merged world state.

7. The method according to claim 6, wherein:
the current account state mapped to the j^{th} account address comprises a first state-data map, and the previous account state mapped to the j^{th} account address comprises a second state-data map; and
updating the previous account state mapped to the j^{th} account address to be the current account state mapped to the j^{th} account address comprises:
updating the second state-data map to comprise correspondence between one or more keys and one or more values of state data in the first state-data map, and inserting the one or more keys in the first state-data map into a set of dirty state-data keys, which is of the previous account state mapped to the j^{th} account address, to obtain the j^{th} transition merged world state.

8. The method according to claim 2, wherein constructing (S103) the first clean world-state tree for the first updated state based on the chain of world states to obtain the updated first world state comprising the first clean world-state tree comprises:
searching (S301) the first updated state for a world-state tree;
in a case that the first updated state comprises a first world-state tree, resolving (S302) all dirty account addresses in the first updated state to obtain the updated first world state;
in a case that the first updated state does not comprise the first world-state tree,
fetching (S303) the second world state according to a direction of the first previous-world-state pointer;
constructing (S304) a second clean world-state tree for the second world state based on the chain of world states, wherein the second clean world-state tree is constructed in a same manner as constructing the first clean world-state tree for the first updated state;
determining (S304) a state-tree root of the second clean world-state tree as a current state-tree root;
constructing (S305) a second world-state tree for the first updated state by using the first tree-node cache and the current state-tree root, and adding the second world-state tree into the first updated state to obtain a second updated state; and
resolving (S306) all dirty account addresses in the second updated state to obtain the updated first world state.

9. The method according to claim 8, wherein resolving (S302) all dirty account addresses in the second updated state to obtain the updated first world state comprises:
merging all downstream dirty account addresses into the second updated state to obtain a third updated state and a whole set of dirty account addresses;
acquire an account-state root of an account state which is mapped in the third updated state to each account address of the whole set of dirty account addresses;
updating the second world-state tree to comprise each account address in the whole set of dirty account addresses and the account-state root mapped to said account address to obtain the first clean world-state tree; and
storing mapping between tree-node hashes and tree nodes, which is in the first clean world-state tree, into a tree-node map in a tree-node cache in the third updated state to obtain the updated first world state.

10. The method according to claim 9, wherein merging all downstream dirty account addresses into the second updated state in the chain of world states to obtain the third updated state and the whole set of dirty account addresses comprises:
traversing the chain of world states downstream the second updated state sequentially to acquire a set of dirty account addresses comprised in each downstream world state; and
for each x being a positive integer less than or equal to a sequential number Z of the second updated state in the chain of world states,
traversing account addresses in an x^{th} set of dirty account addresses, which is comprised in an x^{th} world state in the chain of world states, sequentially to acquire each account address in the x^{th} set of dirty account addresses;
for each m being a positive integer less than or equal to a quantity of all account addresses in the x^{th} set of dirty account addresses,
acquiring a current account state and a previous account state, both of which are mapped to the m^{th} account address; and
merging the current account state mapped to the m^{th} account address and the previous account state mapped the m^{th} account address;
wherein an x^{th} merged world state is obtained after the current account state and the previous account state mapped to each account address in the x^{th} set of dirty account addresses are merged;
adding each dirty account address in the x^{th} set of dirty account addresses into an (x-1)^{th} on-chain set of dirty account addresses to obtain an x^{th} on-chain set of dirty account addresses, wherein the (x-1)^{th} on-chain set of dirty account addresses is an empty set when x is equal to 1; and
when x is equal to Z, determining the x^{th} on-chain set of dirty account addresses as the whole set of dirty account addresses, and determining the x^{th} merged world state as the third updated state.

11. The method according to claim 10, wherein merging the current account state mapped to the m^{th} account address and the previous account state mapped the m^{th} account address comprises:
searching the current account state mapped to the m^{th} account address for an account-state tree;
in a case that the account-state tree is not found in the current account state mapped to the m^{th} account address or the account-state root of the current account state mapped to the m^{th} account address is not equal to the account-state root of the previous account state mapped to the m^{th} account address,
establishing a target account-state tree by using the tree-node cache for the current account state mapped to the m^{th} account address and the account-state root of the previous account state mapped to the m^{th} account address, adding the target account-state tree into the current account state mapped to the m^{th} account address, and updating the account-state root of the current account state mapped to the m^{th} account address to be the account-state root of the previous account state mapped to the m^{th} account address, to obtain a target account state;
in a case the account-state tree is found in the current account state mapped to the m^{th} account address and the account-state root of the current account state mapped to the m^{th} account address is equal to the account-state root of the previous account state mapped to the m^{th} account address,
determining the current account state mapped to the m^{th} account address as the target account state; and
in a case that a first set of dirty state-data keys in the target account state is not an empty set,
acquiring one or more values, which are mapped to one or more dirty state-data keys in the first set of dirty state-data keys, via a state-data map of the target account state;
updating an account-state tree in the target account state to comprise the one or more dirty state-data keys and the one or more values;
updating the account-state root of the target account state to be a root of the updated account-state tree;
emptying the first set of dirty state-data keys of the target account state comprising the updated account-state tree; and
storing mapping between tree-node hashes and tree nodes in the updated account-state tree into the x^{th} merged world state.

12. The method according to claim 11, wherein the method further comprises:
resolving, after the substituting, all dirty account addresses in the newest on-chain world state to obtain a clean newest on-chain world state, wherein a tree-node cache in the clean newest on-chain world state comprises a first tree-node map;
updating a tree-node database to comprise tree-node hashes and tree nodes in the first tree-node map; and
emptying a set of dirty account addresses, an account-state map, and the first tree-node map, which are in the clean newest on-chain world state.

13. A computer device, comprising a processor, a memory, and a network interface,
the processor being connected to the memory and the network interface, the network interface being configured to provide a data communication function, the memory being configured to store program codes, and the processor being configured to invoke the program code to execute the method according to any one of claims 1 to 12.

14. A computer-readable storage medium, storing a computer program, the computer program when executed by a processor implements the method according to any one of claims 1 to 12.

15. A computer program product, comprising a computer program or computer instructions, the computer program or the computer instructions when executed by a processor implements the method according to any one of claims 1 to 12.

## Patentansprüche

1. Verfahren zum Verarbeiten von Daten auf Basis einer Blockkette, die von einer Computervorrichtung ausführbar ist, wobei das Verfahren Folgendes umfasst:
Erzeugen (S101) eines Anfangsblocks;
Erstellen (S101) eines ersten Weltstatus für den Anfangsblock, wobei:
der erste Weltstatus und ein zweiter Weltstatus eines Elternblocks des Anfangsblocks zu einer Kette von Weltstatus gehören und der erste Weltstatus in der Kette von Weltstatus zum zweiten Weltstatus zeigt;
der zweite Weltstatus ein Konsenswurzelweltstatus ist, der in einem Fall, in dem der Elternblock ein Block ist, der unter allen Blöcken in der Blockkette eine größte Höhe aufweist, auf einen neuesten ketteninternen Weltstatus in der Kette von Weltstatus zeigt; und
der neueste ketteninterne Weltstatus ein am weitesten stromabwärts befindlicher Weltstatus in der Kette von Weltstatus ist und unter allen Blöcken in der Blockkette einen jüngsten Weltstatus aufzeichnet;
Aktualisieren (S102) des ersten Weltstatus auf Basis von Transaktionen im Anfangsblock, um einen ersten aktualisierten Status zu erhalten;
Konstruieren (S102) eines ersten sauberen Weltstatusbaums für den ersten aktualisierten Status auf Basis der Kette von Weltstatus, um einen aktualisierten ersten Weltstatus zu erhalten, der den ersten sauberen Weltstatusbaum umfasst;
Schreiben (S103) einer ersten Wurzel des ersten sauberen Weltstatusbaums in den Anfangsblock, um einen Block zu erhalten, der zur Blockkette hinzuzufügen ist;
Übertragen (S103) des hinzuzufügenden Blocks zu Konsensknoten, um es dem Konsensknoten zu ermöglichen, auf Basis der ersten Wurzel über einen Konsensmechanismus eine Verifizierung an dem hinzuzufügenden Block durchzuführen; und
in einem Fall, in dem ein Ergebnis der Verifizierung anzeigt, dass der hinzuzufügende Block die Verifizierung bestanden hat,
Schreiben (S104) des hinzuzufügenden Blocks in die Blockkette, und
sequenzielles Ersetzen (S104) von Daten im aktualisierten ersten Weltstatus durch Daten im Weltstatus in der Kette von Weltstatus entlang einer Vorwärtsrichtung der Kette von Weltstatus, bis der neueste ketteninterne Weltstatus derart aktualisiert ist, dass er mit dem aktualisierten ersten Weltstatus identisch ist, wobei nach dem Ersetzen der aktualisierte erste Weltstatus als der Konsenswurzelweltstatus dient und zum neuesten ketteninternen Weltstatus in der Kette von Weltstatus zeigt.

2. Verfahren nach Anspruch 1, wobei das Erstellen (S101) des ersten Weltstatus für den Anfangsblock Folgendes umfasst:
Erstellen eines Anfangsweltstatus für den Anfangsblock, wobei der Anfangsweltstatus einen vorherigen Weltstatuszeiger und einen ersten Baumknotencache umfasst, der erste Baumknotencache einen ersten vorherigen Baumknotencachezeiger umfasst;
Richten des ersten vorherigen Weltstatuszeigers auf den zweiten Weltstatus des Elternblocks und Richten des ersten vorherigen Baumknotencachezeigers auf einen zweiten Baumknotencache, der im zweiten Weltstatus umfasst ist, um den ersten Weltstatus zu erhalten.

3. Verfahren nach Anspruch 1, wobei das Aktualisieren (S102) des ersten Weltstatus auf Basis der Transaktionen im Anfangsblock, um den ersten aktualisierten Status zu erhalten, Folgendes umfasst:
sequenzielles Durchqueren (S201) von allen Transaktionen im Anfangsblock, um jede Transaktion im Anfangsblock zu erfassen; und
für alle k, die eine positive Ganzzahl kleiner als oder gleich einer Menge H von allen Transaktionen im Anfangsblock sind:
Erstellen (S202) eines k-ten Transaktionsweltstatus für eine k-te Transaktion im Anfangsblock, wobei der k-te Transaktionsweltstatus auf einen zusammengeführten (k-1)-ten Weltstatus in der Kette von Weltstatus zeigt und der erste Weltstatus als der zusammengeführte (k-1)-te Weltstatus dient, wenn k gleich 1 ist;
Ausführen (S203) von Anweisungen in der k-ten Transaktion, um den k-ten Transaktionsweltstatus in einen aktualisierten k-ten Transaktionsweltstatus zu aktualisieren; und
in einem Fall, in dem die k-te Transaktion erfolgreich ausgeführt wird, Zusammenführen (S204) von Daten des aktualisierten k-ten Transaktionsweltstatus im zusammengeführten (k-1)-ten Weltstatus, um einen zusammengeführten k-ten Weltstatus zu erhalten;
wobei der zusammengeführte k-te Weltstatus als der erste aktualisierte Status dient, wenn k gleich H ist.

4. Verfahren nach Anspruch 3, wobei der k-te Transaktionsweltstatus eine Kontostatuskarte und einen Satz von schmutzigen Kontoadressen umfasst und das Ausführen (S203) von Anweisungen in der k-ten Transaktion, um den k-ten Transaktionsweltstatus zum aktualisierten k-ten Transaktionsweltstatus zu aktualisieren, Folgendes umfasst:
Ausführen von Anweisungen in der k-ten Transaktion, um Daten zu bestimmen, die in der k-ten Transaktion zu aktualisieren sind, wobei die zu aktualisierenden Daten eine Adresse eines zu aktualisierenden Kontos, einen Schlüssel von zu aktualisierenden Statusdaten und einen Wert der zu aktualisierenden Statusdaten umfassen;
Erfassen eines Kontostatus, der der Adresse des zu aktualisierenden Kontos zugeordnet ist, gemäß dem k-ten Transaktionsweltstatus als einen zu aktualisierenden Kontostatus, wobei der zu aktualisierende Kontostatus eine zu aktualisierende Statusdatenkarte und einen zu aktualisierenden Satz von schmutzigen Statusdatenschlüsseln umfasst;
Aktualisieren der zu aktualisierenden Statusdatenkarte derart, dass sie eine Zuordnung zwischen dem Schlüssel und dem Wert der zu aktualisierenden Statusdaten umfasst, und Einfügen des Schlüssels der zu aktualisierenden Statusdaten in den zu aktualisierenden Satz von schmutzigen Statusdatenschlüsseln, um einen aktuellen Kontostatus zu erhalten; und
Aktualisieren der Kontostatuskarte im k-ten Transaktionsweltstatus derart, dass sie eine Zuordnung zwischen der Adresse des zu aktualisierenden Kontos und dem aktuellen Kontostatus umfasst, und Einfügen der Adresse des zu aktualisierenden Kontos in den Satz von schmutzigen Kontoadressen im k-ten Transaktionsweltstatus, um den aktualisierten k-ten Transaktionsweltstatus zu erhalten.

5. Verfahren nach Anspruch 4, wobei das Erfassen des Kontostatus, der der Adresse des zu aktualisierenden Kontos zugeordnet ist, gemäß dem k-ten Transaktionsweltstatus als der zu aktualisierende Kontostatus Folgendes umfasst:
sequenzielles Durchsuchen der Kontostatuskarten vom k-ten Transaktionsweltstatus zum neuesten ketteninternen Weltstatus entlang der Kette von Weltstatus nach der Adresse des zu aktualisierenden Kontos;
in Reaktion darauf, dass die Adresse des zu aktualisierenden Kontos gefunden wird, Bestimmen eines Kontostatus, der der frühesten gefundenen Adresse des zu aktualisierenden Kontos zugeordnet ist, als den zu aktualisierenden Kontostatus; und
in Reaktion darauf, dass die Adresse des zu aktualisierenden Kontos nicht gefunden wird, Erfassen einer Statusbaumwurzel der Adresse des zu aktualisierenden Kontos in einem Weltstatusbaum des neuesten ketteninternen Weltstatus und Herstellen des zu aktualisierenden Kontostatus gemäß der Adresse des zu aktualisierenden Kontos und der Statusbaumwurzel.

6. Verfahren nach Anspruch 4, wobei das Zusammenführen der Daten des aktualisierten k-ten Transaktionsweltstatus in den zusammengeführten (k-1)-ten Weltstatus, um den zusammengeführten k-ten Weltstatus zu erhalten, Folgendes umfasst:
sequenzielles Durchqueren von einer oder mehreren Kontoadressen im Satz von schmutzigen Kontoadressen im aktualisierten k-ten Transaktionsweltstatus, um jede Kontoadresse im Satz von schmutzigen Kontoadressen zu erfassen; und
für jedes j, das eine positive Ganzzahl kleiner als oder gleich einer Gesamtmenge I der Kontoadressen im Satz von schmutzigen Kontoadressen ist,
Erfassen eines aktuellen Kontostatus, der der j-ten Kontoadresse zugeordnet ist, in der Kontostatuskarte des aktualisierten k-ten Transaktionsweltstatus;
Erfassen eines vorherigen Kontostatus, der der j-ten Kontoadresse zugeordnet ist, gemäß dem zusammengeführten (k-1)-ten Weltstatus;
Aktualisieren des vorherigen Kontostatus, der der j-ten Kontoadresse zugeordnet ist, derart, dass er der aktuelle Kontostatus ist, der der j-ten Kontoadresse zugeordnet ist, und Einfügen der j-ten Kontoadresse in den Satz von schmutzigen Kontoadressen des zusammengeführten (k-1)-ten Weltstatus, um einen zusammengeführten j-ten Übergangsweltstatus zu erhalten; und
wenn j gleich I ist, Entleeren des Satzes von schmutzigen Kontoadressen und der Kontostatuskarte, die zum aktualisierten k-ten Transaktionsweltstatus gehören, und Bestimmen des j-ten Übergangsweltstatus zum Dienen als der zusammengeführte k-te Weltstatus.

7. Verfahren nach Anspruch 6, wobei:
der aktuelle Kontostatus, der der j-ten Kontoadresse zugeordnet ist, eine erste Statusdatenkarte umfasst und der vorherige Kontostatus, der der j-ten Kontoadresse zugeordnet ist, eine zweite Statusdatenkarte umfasst; und
das Aktualisieren des vorherigen Kontostatus, der der j-ten Kontoadresse zugeordnet ist, derart, dass er der aktuelle Kontostatus ist, der der j-ten Kontoadresse zugeordnet ist, Folgendes umfasst:
Aktualisieren der zweiten Statusdatenkarte derart, dass sie eine Entsprechung zwischen einem oder mehreren Schlüsseln und einem oder mehreren Werten von Statusdaten in der ersten Statusdatenkarte umfasst, und Einfügen des einen oder der mehreren Schlüssel in der ersten Statusdatenkarte in einen Satz von schmutzigen Statusdatenschlüsseln, der zum vorherigen Kontostatus gehört, der der j-ten Kontoadresse zugeordnet ist, um den zusammengeführten j-ten Übergangsweltstatus zu erhalten.

8. Verfahren nach Anspruch 2, wobei das Konstruieren (S103) des ersten sauberen Weltstatusbaums für den ersten aktualisierten Status auf Basis der Kette von Weltstatus, um den aktualisierten ersten Weltstatus zu erhalten, der den ersten sauberen Weltstatusbaum umfasst, Folgendes umfasst:
Durchsuchen (S301) des ersten aktualisierten Status nach einem Weltstatusbaum;
in einem Fall, in dem der aktualisierte Status einen ersten Weltstatusbaum umfasst, Auflösen (S302) von allen Kontoadressen im ersten aktualisierten Status, um den aktualisierten ersten Weltstatus zu erhalten;
in einem Fall, in dem der erste aktualisierte Status den ersten Weltstatusbaum nicht umfasst,
Abrufen (S303) des zweiten Weltstatus gemäß einer Richtung des ersten vorherigen Weltstatuszeigers;
Konstruieren (S304) eines zweiten sauberen Weltstatusbaums für den zweiten Weltstatus auf Basis der Kette von Weltstatus, wobei der zweite saubere Weltstatusbaum in einer selben Weise wie das Konstruieren des ersten sauberen Weltstatusbaums für den ersten aktualisierten Status konstruiert wird;
Bestimmen (S304) einer Statusbaumwurzel des zweiten sauberen Weltstatusbaums als eine aktuelle Statusbaumwurzel;
Konstruieren (S305) eines zweiten Weltstatusbaums für den ersten aktualisierten Status unter Verwendung des ersten Baumknotencache und der aktuellen Statusbaumwurzel und Hinzufügen des zweiten Weltstatusbaums zum ersten aktualisierten Status, um den zweiten aktualisierten Status zu erhalten; und
Auflösen (S306) von allen schmutzigen Kontoadressen im zweiten aktualisierten Status, um den aktualisierten ersten Weltstatus zu erhalten.

9. Verfahren nach Anspruch 8, wobei das Auflösen (S302) von allen schmutzigen Kontoadressen im zweiten aktualisierten Status, um den aktualisierten ersten Weltstatus zu erhalten, Folgendes umfasst:
Zusammenführen von allen stromabwärtigen schmutzigen Kontoadressen in den zweiten aktualisierten Status, um einen dritten aktualisierten Status und einen ganzen Satz von schmutzigen Kontoadressen zu erhalten;
Erfassen einer Kontostatuswurzel eines Kontostatus, der im dritten aktualisierten Status zu jeder Kontoadresse des ganzen Satzes von schmutzigen Kontoadressen zugeordnet ist;
Aktualisieren des zweiten Weltstatusbaums derart, dass er jede Kontoadresse im ganzen Satz von schmutzigen Kontoadressen und die Kontostatuswurzel, die der Kontoadresse zugeordnet ist, umfasst, um den ersten sauberen Weltstatusbaum zu erhalten; und
Speichern der Zuordnung zwischen Baumknotenhashes und Baumknoten, die sich im ersten sauberen Weltstatusbaum befindet, in einer Baumknotenkarte in einem Baumknotencache im dritten aktualisierten Status, um den aktualisierten ersten Weltstatus zu erhalten.

10. Verfahren nach Anspruch 9, wobei das Zusammenführen von allen stromabwärtigen schmutzigen Kontoadressen in den zweiten aktualisierten Status in der Kette von Weltstatus, um den dritten aktualisierten Status und den ganzen Satz von schmutzigen Kontoadressen zu erhalten, Folgendes umfasst:
sequenzielles Durchqueren der Kette von Weltstatus stromabwärts durch den zweiten aktualisierten Status, um einen Satz von schmutzigen Kontoadressen zu erfassen, der in jedem stromabwärtigen Weltstatus umfasst ist; und
für jedes x, das eine positive Ganzzahl kleiner als oder gleich einer sequenziellen Anzahl Z des zweiten aktualisierten Status in der Kette der Weltstatus ist,
sequenzielles Durchquerens von Kontoadressen in einem x-ten Satz von schmutzigen Kontoadressen, der in einem x-ten Weltstatus in der Kette von Weltstatus umfasst ist, um jede Kontoadresse im x-ten Satz von schmutzigen Kontoadressen zu erfassen;
für jedes m, das eine positive Ganzzahl kleiner als oder gleich einer Menge von allen Kontoadressen im x-ten Satz von schmutzigen Kontoadressen ist,
Erfassen eines aktuellen Kontostatus und eines vorherigen Kontostatus, die beide der m-ten Kontoadresse zugeordnet sind; und
Zusammenführen des aktuellen Kontostatus, der der m-ten Kontoadresse zugeordnet ist, und des vorherigen Kontostatus, der der m-ten Kontoadresse zugeordnet ist;
wobei ein zusammengeführter x-ter Weltstatus erhalten wird, nachdem der aktuelle Kontostatus und der vorherige Kontostatus, die jeder Kontoadresse im x-ten Satz von schmutzigen Kontoadressen zugeordnet sind, zusammengeführt sind;
Hinzufügen von jeder schmutzigen Kontoadresse im x-ten Satz von schmutzigen Kontoadressen zu einem (x-1)-ten ketteninternen Satz von schmutzigen Kontoadressen, um einen x-ten ketteninternen Satz von schmutzigen Kontoadressen zu erhalten, wobei der (x-1)-te ketteninterne Satz von schmutzigen Kontoadressen ein leerer Satz ist, wenn x gleich 1 ist; und
wenn x gleich Z ist, Bestimmen des x-ten ketteninternen Satzes von schmutzigen Kontoadressen als den gesamten Satz von schmutzigen Kontoadressen und Bestimmen des x-ten zusammengeführten Weltstatus als den dritten aktualisierten Status.

11. Verfahren nach Anspruch 10, wobei das Zusammenführen des aktuellen Kontostatus, der der m-ten Kontoadresse zugeordnet ist, und des vorherigen Kontostatus, der der m-ten Kontoadresse zugeordnet ist, Folgendes umfasst:
Durchsuchen des aktuellen Kontostatus, der der m-ten Kontoadresse zugeordnet ist, nach einem Kontostatusbaum;
in einem Fall, in dem der Kontostatusbaum im aktuellen Kontostatus, der der m-ten Kontoadresse zugeordnet ist, nicht gefunden wird oder die Kontostatuswurzel des aktuellen Kontostatus, der der m-ten Kontoadresse zugeordnet ist, nicht gleich der Kontostatuswurzel des vorherigen Kontostatus ist, der der m-ten Kontoadresse zugeordnet ist,
Herstellen eines Zielkontostatusbaums unter Verwendung des Baumknotencache für den aktuellen Kontostatus, der der m-ten Kontoadresse zugeordnet ist, und der Kontostatuswurzel des vorherigen Kontostatus, der der m-ten Kontoadresse zugeordnet ist, Hinzufügen des Zielkontostatusbaums zum aktuellen Kontostatus, der der m-ten Kontoadresse zugeordnet ist, und Aktualisieren der Kontostatuswurzel des aktuellen Kontostatus, der der m-ten Kontoadresse zugeordnet ist, derart, dass sie die Kontostatuswurzel des vorherigen Kontostatus ist, der der m-ten Kontoadresse zugeordnet ist, um einen Zielkontostatus zu erhalten;
in einem Fall, in dem der Kontostatusbaum im aktuellen Kontostatus, der der m-ten Kontoadresse zugeordnet ist, gefunden wird und die Kontostatuswurzel des aktuellen Kontostatus, der der m-ten Kontoadresse zugeordnet ist, gleich der Kontostatuswurzel des vorherigen Kontostatus ist, der der m-ten Kontoadresse zugeordnet ist,
Bestimmen des aktuellen Kontostatus, der der m-ten Kontoadresse zugeordnet ist, als den Zielkontostatus; und
in einem Fall, in dem ein erster Satz von schmutzigen Statusdatenschlüsseln im Zielkontostatus kein leerer Satz ist,
Erfassen von einem oder mehreren Werten, die einem oder mehreren schmutzigen Statusdatenschlüsseln im ersten Satz von schmutzigen Statusdatenschlüsseln zugeordnet sind, via eine Statusdatenkarte des Zielkontostatus;
Aktualisieren eines Kontostatusbaums im Zielkontostatus derart, dass er den einen oder die mehreren schmutzigen Statusdatenschlüssel und den einen oder die mehreren Werte umfasst;
Aktualisieren der Kontostatuswurzel des Zielkontostatus derart, dass sie eine Wurzel des aktualisierten Kontostatusbaums ist;
Entleeren des ersten Satzes von schmutzigen Statusdatenschlüsseln des Zielkontostatus, der den aktualisierten Kontostatusbaum umfasst; und
Speichern einer Zuordnung zwischen Baumknotenhashes und Baumknoten im aktualisierten Kontostatusbaum im x-ten zusammengeführten Weltstatus.

12. Verfahren nach Anspruch 11, wobei das Verfahren ferner Folgendes umfasst:
nach dem Ersetzen Auflösen von allen schmutzigen Kontoadressen im neuesten ketteninternen Weltstatus, um einen sauberen neuesten ketteninternen Weltstatus zu erhalten, wobei ein Baumknotencache im sauberen neuesten ketteninternen Weltstatus eine erste Baumknotenkarte umfasst;
Aktualisieren einer Baumknotendatenbank derart, dass sie Baumknotenhashes und Baumknoten in der ersten Baumknotenkarte umfasst; und
Entleeren eines Satzes von schmutzigen Kontoadressen, einer Kontostatuskarte und der ersten Baumknotenkarte, die sich im sauberen neuesten ketteninternen Weltstatus befinden.

13. Computervorrichtung, die einen Prozessor, einen Speicher und eine Netzwerkschnittstelle umfasst,
wobei der Prozessor mit dem Speicher und der Netzwerkschnittstelle verbunden ist, wobei die Netzwerkschnittstelle dazu ausgelegt ist, eine Datenkommunikationsfunktion bereitzustellen, wobei der Speicher dazu ausgelegt ist, Programmcodes zu speichern, und wobei der Prozessor dazu ausgelegt ist, den Programmcode aufzurufen, um das Verfahren nach einem der Ansprüche 1 bis 12 auszuführen.

14. Computerlesbares Speichermedium, auf dem ein Computerprogramm gespeichert ist, wobei das Computerprogramm, wenn es von einem Prozessor ausgeführt wird, das Verfahren nach einem der Ansprüche 1 bis 12 implementiert.

15. Computerprogrammprodukt, das ein Computerprogramm oder Computeranweisungen umfasst, wobei das Computerprogramm bzw. die Computeranweisungen, wenn sie von einem Prozessor ausgeführt werden, das Verfahren nach einem der Ansprüche 1 bis 12 implementiert bzw. implementieren.

## Revendications

1. Procédé de traitement de données sur la base d'une chaîne de blocs, exécutable par un dispositif informatique, dans lequel le procédé comprend les étapes suivantes :
générer (S101) un bloc initial ;
créer (S101) un premier état du monde pour le bloc initial, dans lequel :
le premier état du monde et un deuxième état du monde d'un bloc parent du bloc initial appartiennent à une chaîne d'états du monde, et le premier état du monde pointe vers le deuxième état du monde de la chaîne d'états du monde ;
le deuxième état du monde est un état du monde racine de consens qui pointe vers l'état du monde le plus récent sur la chaîne de la chaîne d'états du monde dans le cas où le bloc parent est un bloc ayant la plus grande hauteur parmi tous les blocs de la chaîne de blocs ; et
l'état du monde le plus récent sur la chaîne est l'état du monde le plus en aval de la chaîne d'états du monde et enregistre l'état du monde le plus récent parmi tous les blocs de la chaîne de blocs ;
mettre à jour (S102) le premier état du monde sur la base de transactions dans le bloc initial afin d'obtenir un premier état mis à jour ;
construire (S102) un premier arbre d'état du monde propre pour le premier état mis à jour sur la base de la chaîne d'états du monde afin d'obtenir un premier état du monde mis à jour comprenant le premier arbre d'état du monde propre ;
écrire (S103) une première racine du premier arbre d'état du monde propre dans le bloc initial afin d'obtenir un bloc à ajouter dans la chaîne de blocs ;
transmettre (S103) le bloc à ajouter à des nœuds de consensus pour permettre au nœud de consensus d'effectuer une vérification sur le bloc à ajouter sur la base de la première racine par un mécanisme de consensus ; et
dans le cas où un résultat de la vérification indique que le bloc à ajouter réussit la vérification,
écrire (S104) le bloc à ajouter dans la chaîne de blocs, et
substituer (S104) des données dans le premier état du monde mis à jour par des données dans états du monde de la chaîne d'états du monde séquentiellement le long d'une direction avant de la chaîne d'états du monde jusqu'à ce que l'état du monde le plus récent sur la chaîne soit mis à jour pour être identique au premier état du monde mis à jour, dans lequel, après la substitution, le premier état du monde mis à jour sert d'état du monde racine de consens et pointe vers l'état du monde le plus récent sur la chaîne de la chaîne d'états du monde.

2. Procédé selon la revendication 1, dans lequel la création (S101) du premier état du monde pour le bloc initial comprend :
la création d'un état du monde initial pour le bloc initial, dans lequel l'état du monde initial comprend un premier pointeur d'état du monde précédent et un premier cache de nœud d'arbre, le premier cache de nœud d'arbre comprend un premier pointeur de cache de nœud d'arbre précédent ;
l'orientation du premier pointeur d'état du monde précédent vers le deuxième état du monde du bloc parent, et l'orientation du premier pointeur de cache de nœud d'arbre précédent vers un deuxième cache de nœud d'arbre compris dans le deuxième état du monde, afin d'obtenir le premier état du monde.

3. Procédé selon la revendication 1, dans lequel la mise à jour (S102) du premier état du monde sur la base des transactions dans le bloc initial afin d'obtenir le premier état mis à jour comprend :
le parcours (S201) séquentiel de toutes les transactions dans le bloc initial pour acquérir chaque transaction dans le bloc initial ; et
pour chaque k étant un entier positif inférieur ou égal à une quantité H de toutes les transactions dans le bloc initial :
la création (S202) d'un k^{ème} état du monde de transaction pour une k^{ème} transaction dans le bloc initial, dans lequel le k^{ème} état du monde de transaction pointe vers un (k-₁)ème état du monde fusionné de la chaîne d'états du monde, et le premier état du monde sert de (k-₁)ème état du monde fusionné lorsque k est égal à 1,
l'exécution (S203) d'énoncés dans la k^{ème} transaction pour mettre à jour le k^{ème} état du monde de transaction vers un k^{ème} état du monde de transaction mis à jour ; et
la fusion (S204) de données du k^{ème} état du monde de transaction mis à jour avec le (k-₁)ème état du monde fusionné afin d'obtenir un k^{ème} état du monde fusionné dans le cas où la k^{ème} transaction est exécutée avec succès ;
dans lequel le k^{ème} état du monde fusionné sert de premier état mis à jour lorsque k est égal à H.

4. Procédé selon la revendication 3, dans lequel le k^{ème} état du monde de transaction comprend une carte d'état de compte et un ensemble d'adresses de compte indésirables, et l'exécution (S203) d'énoncés dans la k^{ème} transaction pour mettre à jour le k^{ème} état du monde de transaction dans le k^{ème} état du monde de transaction mis à jour comprend :
l'exécution d'énoncés dans la k^{ème} transaction afin de déterminer des données à mettre à jour dans la k^{ème} transaction, dans lequel les données à mettre à jour comprennent une adresse d'un compte à mettre à jour, une clé des données à mettre à jour, et une valeur des données à mettre à jour ;
l'acquisition d'un état de compte qui est mappé à l'adresse du compte à mettre à jour selon le k^{ème} état du monde de transaction comme état de compte à mettre à jour, dans lequel l'état de compte à mettre à jour comprend une carte de données à mettre à jour et un ensemble à mettre à jour de clés de données d'état indésirables ;
la mise à jour de la carte de données à mettre à jour pour inclure le mappage entre la clé et la valeur des données à mettre à jour, et l'insertion de la clé des données à mettre à jour dans l'ensemble à mettre à jour de clés de données d'état indésirables afin d'obtenir un état de compte actuel ; et
la mise à jour de la carte d'état de compte dans le k^{ème} état du monde de transaction pour inclure le mappage entre l'adresse du compte à mettre à jour et l'état de compte actuel, et l'insertion de l'adresse du compte à mettre à jour dans l'ensemble d'adresses de compte indésirables dans le k^{ème} état du monde de transaction afin d'obtenir le k^{ème} état du monde de transaction mis à jour.

5. Procédé selon la revendication 4, dans lequel l'acquisition de l'état de compte qui est mappé à l'adresse du compte à mettre à jour selon le k^{ème} état du monde de transaction comme état de compte à mettre à jour comprend :
la recherche séquentielle de l'adresse du compte à mettre à jour dans les cartes d'état de compte, du k^{ème} état du monde de transaction à l'état du monde le plus récent sur la chaîne le long de la chaîne d'états du monde ;
en réponse à la découverte de l'adresse du compte à mettre à jour, la détermination d'un état de compte mappé à l'adresse trouvée en premier du compte à mettre à jour comme état de compte à mettre à jour ; et
en réponse à la non découverte de l'adresse du compte à mettre à jour, l'acquisition d'une racine d'arbre d'état de l'adresse du compte à mettre à jour dans un arbre d'état du monde de l'état du monde le plus récent sur la chaîne, et l'établissement de l'état de compte à mettre à jour selon l'adresse du compte à mettre à jour et la racine d'arbre d'état.

6. Procédé selon la revendication 4, dans lequel la fusion des données du k^{ème} état du monde de transaction mis à jour avec le (k-1)^{ème} état du monde fusionné afin d'obtenir le k^{ème} état du monde fusionné comprend :
le parcours d'une ou plusieurs adresses de compte de l'ensemble d'adresses de compte indésirables dans le k^{ème} état du monde de transaction mis à jour séquentiellement pour acquérir chaque adresse de compte de l'ensemble d'adresses de compte indésirables ; et
pour chaque j étant un entier positif inférieur ou égal à une quantité totale I des adresses de compte de l'ensemble d'adresses de compte indésirables,
l'acquisition d'un état de compte actuel mappé à la j^{ème} adresse de compte dans la carte d'état de compte du k^{ème} état du monde de transaction mis à jour ;
l'acquisition d'un état de compte précédent qui est mappé à la j^{ème} adresse de compte selon le (k-1)^{ème} état du monde fusionné ;
la mise à jour de l'état de compte précédent mappé à la j^{ème} adresse de compte vers l'état de compte actuel mappé à la j^{ème} adresse de compte, et l'insertion de la j^{ème} adresse de compte de l'ensemble d'adresses de compte indésirables du (k-₁)ème état du monde fusionné afin d'obtenir un j^{ème} état du monde fusionné de transition ; et
lorsque j est égal à I, le vidage de l'ensemble d'adresses de compte indésirables et de la carte d'état de compte qui concernent le k^{ème} état du monde de transaction mis à jour, et la détermination du j^{ème} état du monde fusionné de transition pour servir de k^{ème} état du monde fusionné.

7. Procédé selon la revendication 6, dans lequel :
l'état de compte actuel mappé à la j^{ème} adresse de compte comprend une première carte de données d'état, et l'état de compte précédent mappé à la j^{ème} adresse de compte comprend une deuxième carte de données d'état ; et
la mise à jour de l'état de compte précédent mappé à la j^{ème} adresse de compte vers l'état de compte actuel mappé à la j^{ème} adresse de compte comprend :
la mise à jour de la deuxième carte de données d'état pour inclure la correspondance entre une ou plusieurs clés et une ou plusieurs valeurs de données d'état dans la première carte de données d'état, et l'insertion des une ou plusieurs clés de la première carte de données d'état dans un ensemble de clés de données d'état indésirables qui concernent l'état de compte précédent mappé à la j^{ème} adresse de compte, afin d'obtenir le j^{ème} état du monde fusionné de transition.

8. Procédé selon la revendication 2, dans lequel la construction (S103) du premier arbre d'état du monde propre pour le premier état mis à jour sur la base de la chaîne d'états du monde afin d'obtenir le premier état du monde mis à jour comprenant le premier arbre d'état du monde propre comprend :
la recherche (S301) d'un arbre d'état du monde dans le premier état mis à jour ;
dans le cas où le premier état mis à jour comprend un premier arbre d'état du monde, la résolution (S302) de toutes les adresses de compte indésirables dans le premier état mis à jour afin d'obtenir le premier état du monde mis à jour ;
dans le cas où le premier état mis à jour n'inclut pas le premier arbre d'état du monde,
la récupération (S303) du deuxième état du monde selon une direction du premier pointeur d'état du monde précédent ;
la construction (S304) d'un deuxième arbre d'état du monde propre pour le deuxième état du monde sur la base de la chaîne d'états du monde, dans lequel le deuxième arbre d'état du monde propre est construit de la même manière que la construction du premier arbre d'état du monde propre pour le premier état mis à jour ;
la détermination (S304) d'une racine d'arbre d'état du deuxième arbre d'état du monde propre comme racine d'arbre d'état actuelle ;
la construction (S305) d'un deuxième arbre d'état du monde pour le premier état mis à jour en utilisant le premier cache de nœud d'arbre et la racine d'arbre d'état actuelle, et l'ajout du deuxième arbre d'état du monde dans le premier état mis à jour afin d'obtenir un deuxième état mis à jour ; et
la résolution (S306) de toutes les adresses de compte indésirables dans le deuxième état mis à jour afin d'obtenir le premier état du monde mis à jour.

9. Procédé selon la revendication 8, dans lequel la résolution (S302) de toutes les adresses de compte indésirables dans le deuxième état mis à jour afin d'obtenir le premier état du monde mis à jour comprend :
la fusion de toutes les adresses de compte indésirables en aval dans le deuxième état mis à jour afin d'obtenir un troisième état mis à jour et un ensemble complet d'adresses de compte indésirables ;
l'acquisition d'une racine d'état de compte d'un état de compte qui est mappé dans le troisième état mis à jour à chaque adresse de compte de l'ensemble complet d'adresses de compte indésirables ;
la mise à jour du deuxième arbre d'état du monde pour inclure chaque adresse de compte dans l'ensemble complet d'adresses de compte indésirables et la racine d'état de compte mappée à ladite adresse de compte afin d'obtenir le premier arbre d'état du monde propre ; et
le stockage du mappage entre des hachages de nœud d'arbre et des nœuds d'arbre se trouvant dans le premier arbre d'état du monde propre dans une carte de nœud d'arbre dans un cache de nœud d'arbre dans le troisième état mis à jour afin d'obtenir le premier état du monde mis à jour.

10. Procédé selon la revendication 9, dans lequel la fusion de toutes les adresses de compte indésirables en aval dans le deuxième état mis à jour de la chaîne d'états du monde afin d'obtenir le troisième état mis à jour et l'ensemble complet d'adresses de compte indésirables comprend :
le parcours séquentiel de la chaîne d'états du monde en aval du deuxième état mis à jour pour acquérir un ensemble d'adresses de compte indésirables comprises dans chaque état du monde en aval ; et
pour chaque x étant un entier positif inférieur ou égal à un numéro séquentiel Z du deuxième état mis à jour de la chaîne d'états du monde,
le parcours séquentiel d'adresses de compte d'un x^{ème} ensemble d'adresses de compte indésirables comprises dans un x^{ème} état du monde de la chaîne d'états du monde, pour acquérir chaque adresse de compte du x^{ème} ensemble d'adresses de compte indésirables ;
pour chaque m étant un entier positif inférieur ou égal à une quantité de toutes les adresses de compte du x^{ème} ensemble d'adresses de compte indésirables,
l'acquisition d'un état de compte actuel et d'un état de compte précédent mappés tous deux à la m^{ème} adresse de compte ; et
la fusion de l'état de compte actuel mappé à la m^{ème} adresse de compte et de l'état de compte précédent mappé la m^{ème} adresse de compte ;
dans lequel un x^{ème} état du monde fusionné obtenu après l'état de compte actuel et l'état de compte précédent mappé à chaque adresse de compte du x^{ème} ensemble d'adresses de compte indésirables sont fusionnés ;
l'ajout de chaque adresse de compte indésirable du x^{ème} ensemble d'adresses de compte indésirables dans un (x-1)^{ème} ensemble d'adresses de compte indésirables sur la chaîne afin d'obtenir un x^{ème} ensemble d'adresses de compte indésirables sur la chaîne, dans lequel le (x-1)^{ème} ensemble d'adresses de compte indésirables sur la chaîne est un ensemble vide lorsque x est égal à 1 ; et
lorsque x est égal à Z, la détermination du x^{ème} ensemble d'adresses de compte indésirables sur la chaîne comme ensemble complet d'adresses de compte indésirables, et la détermination du x^{ème} état du monde fusionné comme troisième état mis à jour.

11. Procédé selon la revendication 10, dans lequel la fusion de l'état de compte actuel mappé à la m^{ème} adresse de compte et de l'état de compte précédent mappé la m^{ème} adresse de compte comprend :
la recherche d'un arbre d'état de compte dans l'état de compte actuel mappé à la m^{ème} adresse de compte ;
dans le cas où l'arbre d'état de compte n'est pas trouvé dans l'état de compte actuel mappé à la m^{ème} adresse de compte ou que la racine d'état de compte de l'état de compte actuel mappé à la m^{ème} adresse de compte n'est pas égale à la racine d'état de compte de l'état de compte précédent mappé à la m^{ème} adresse de compte,
l'établissement d'un arbre d'état de compte cible en utilisant le cache de nœud d'arbre pour l'état de compte actuel mappé à la m^{ème} adresse de compte et la racine d'état de compte de l'état de compte précédent mappé à la m^{ème} adresse de compte, l'ajout de l'arbre d'état de compte cible dans l'état de compte actuel mappé à la m^{ème} adresse de compte, et la mise à jour de la racine d'état de compte de l'état de compte actuel mappé à la m^{ème} adresse de compte vers la racine d'état de compte de l'état de compte précédent mappé à la m^{ème} adresse de compte, afin d'obtenir un état de compte cible ;
dans le cas où l'arbre d'état de compte est trouvé dans l'état de compte actuel mappé à la m^{ème} adresse de compte et que la racine d'état de compte de l'état de compte actuel mappé à la m^{ème} adresse de compte est égale à la racine d'état de compte de l'état de compte précédent mappé à la m^{ème} adresse de compte,
la détermination de l'état de compte actuel mappé à la m^{ème} adresse de compte comme état de compte cible ; et
dans le cas où un premier ensemble de clés de données d'état indésirables dans l'état de compte cible n'est pas un ensemble vide,
l'acquisition d'une ou plusieurs valeurs qui sont mappés à une ou plusieurs clés de données d'état indésirables dans le premier ensemble de clés de données d'état indésirables via une première carte de données d'état de l'état de compte cible ;
la mise à jour d'un arbre d'état de compte dans l'état de compte cible pour inclure les une ou plusieurs clés de données d'état indésirables et les une ou plusieurs valeurs ;
la mise à jour de la racine d'état de compte de l'état de compte cible vers une racine de l'arbre d'état de compte mis à jour ;
le vidage du premier ensemble de clés de données d'état indésirables de l'état de compte cible comprenant l'arbre d'état de compte mis à jour ; et
le stockage du mappage entre des hachages de nœud d'arbre et des nœuds d'arbre dans l'arbre d'état de compte mis à jour dans le x^{eme} état du monde fusionné.

12. Procédé selon la revendication 11, dans lequel le procédé comprend en outre les étapes suivantes :
après la substitution, résoudre toutes les adresses de compte indésirables dans l'état du monde le plus récent sur la chaîne afin d'obtenir l'état du monde propre le plus récent sur la chaîne, dans lequel un cache de nœud d'arbre dans l'état du monde propre le plus récent sur la chaîne comprend une première carte de nœud d'arbre ;
mettre à jour une base de données de nœud d'arbre pour inclure des hachages de nœud d'arbre et des nœuds d'arbre dans la première carte de nœud d'arbre ; et
vider un ensemble d'adresses de compte indésirables, une carte d'état de compte et la première carte de nœud d'arbre qui sont dans l'état du monde propre le plus récent sur la chaîne.

13. Dispositif informatique, comprenant un processeur, une mémoire et une interface réseau,
le processeur étant connecté à la mémoire et à l'interface réseau, l'interface réseau étant configurée pour fournir une fonction de communication de données, la mémoire étant configurée pour stocker des codes de programme, et le processeur étant configuré pour invoquer le code de programme afin d'exécuter le procédé selon l'une des revendications 1 à 12.

14. Support de stockage lisible par ordinateur stockant un programme informatique, le programme informatique, lorsqu'il est exécuté par un processeur, met en œuvre le procédé selon l'une des revendications 1 à 12.

15. Produit de programme informatique comprenant un programme informatique ou des instructions informatiques, le programme informatique ou les instructions informatiques, lorsqu'ils sont exécutés par un processeur, mettent en œuvre le procédé selon l'une des revendications 1 à 12.
